# EUROPEAN PATENT APPLICATION

(11) **EP 4 088 927 A1**
(43) Date of publication of application: **16.11.2022**
(21) Application number: 21760754.8
(22) Date of filing: 25.02.2021
(51) Int. Cl.: B32B 27/40, C09D 5/00, C09D 175/04, C09D 175/06, C08G 18/10, C08G 18/42, C08G 18/44, C08G 18/80, G02B 5/23, C09D 7/20, C09D 7/41, C09D 7/47

(54) **PRIMER COMPOSITION FOR OPTICAL ARTICLE, AND LAMINATE**

(30) Priority: 27.02.2020 JP 2020031326
(71) Applicant: Tokuyama Corporation, Shunan-shi, Yamaguchi 745-8648 (JP)
(72) Inventor: HANASAKI Taichi, Shunan-shi, Yamaguchi 745-8648 (JP); MORI Katsuhiro, Shunan-shi, Yamaguchi 745-8648 (JP); TAKENAKA Junji, Shunan-shi, Yamaguchi 745-8648 (JP); MOMODA Junji, Shunan-shi, Yamaguchi 745-8648 (JP)
(74) Representative: Canzler & Bergmeier Patentanwälte Partnerschaft mbB
(86) International application number: PCT/JP2021/007017
(87) International publication number: WO 2021/172404

(57) **Abstract**

To provide a primer composition that is for an optical article, that has excellent preservation stability, and that can be used in a dip coating method. A primer composition for optical article, the composition comprising: (A) an urethane prepolymer that is a reactant between (A1) a polyisocyanate compound having two or more isocyanate groups per molecule and (A2) at least one polyol compound having two or more hydroxyl groups per molecule and being selected from the group consisting of polycarbonate polyols, polyester polyols, and polycaprolactone polyols, and that has two or more isocyanate groups per molecule protected by a blocking agent; (B) an active hydrogen-containing compound having, per molecule, two or more active hydrogen functional groups having an active hydrogen; and (C) an organic solvent not having an active hydrogen.

## Description

### TECHNICAL FIELD

The present invention relates to a novel primer composition for an optical article of one-component type. Further, the present invention relates to a novel multilayer body to which a primer layer obtained by curing the primer composition for the optical article is stacked on, and also relates to an optical article having a functional layer which is stacked on the multilayer body. Further, the present invention also relates to a method of production of these.

### BACKGROUND OF THE INVENTION

An optical substrate can be used for various purposes by stacking a layer having functionalities on the optical substrate. For example, when a photochromic layer including a photochromic compound is stacked as the functional layer, and this can be used as a photochromic lens which can function as sun glasses at outdoor and as a transparent lens at indoor. Other than this, when an ultraviolet ray absorbing layer including a compound which absorbs ultraviolet ray, blue light, and so on is stacked as the functional layer, this can be used an optical substrate having an ultraviolet ray absorbing property. Also, when a hard coat layer is formed as the functional layer, then the strength of the optical substrate can be enhanced. The functional layer may include a plurality of layers of the photochromic layer, the ultraviolet ray absorbing layer, and the hard coat layer.

Usually, when the functional layer is formed on the optical substrate, a method described in below may be used. For example, a spin coat method may be mentioned, in which a coating composition (a coating agent) is applied on the optical substrate, then the optical substrate is rotated for coating to form the functional layer. There is also a method in which the optical substrate is placed in a mold, then the coating agent including a curable composition is provided into the mold, then curing is performed to form the functional layer. Further, an optical substrate may be directly immersed into the coating agent including the curable composition to produce the multilayer body with a functional layer on the optical substrate, which is a method of a so-called dip coat method.

These methods are appropriately selected for the right uses, and a coating agent which can be easily used for a plurality of methods still do not exist.

When the functional layer is stacked, it may be directly stacked on the optical substrate, however in order to enhance the adhesion property against the optical substrate, a primer layer may be formed between the optical substrate and the functional layer. This primer layer may also have a functionality for example by mixing a photochromic compound to the primer layer. This primer layer is formed on the optical substrate to improve the adhesion between the optical layer and other layers such as aforementioned functional layer. Various studies have been carried out to improve the adhesion property of this primer layer. The primer layer adheres to the optical substrate and also adheres to the functional layer, thus the adhesion between the optical substrate and the functional layer can be improved.

As a material forming a specific primer layer, a primer composition including a moisture curing urethane (Patent document 1), a primer composition made of urethane resin emulsion including a reactive group (Patent document 2), and the like have been developed. By using these primer compositions, for example, it is known that the optical substrate and the photochromic layer can be strongly adhered with each other. A method of forming such primer composition on the optical substrate is described in these patent documents, and specifically the primer layer is formed by using a spin coat method according to the examples of these patent documents.

[Patent document 1] WO2004/078476
[Patent document 2] WO2008/001875

### SUMMARY

When a spin coat method is used, an adequate amount of a primer composition is coated on a lens to from a coating layer. Hence, the primer composition itself can be handled easily. The primer composition has a relatively high reactivity, and it may be cured by reacting with oxygen and water in atmosphere, which may modify the composition. Regarding a spin coat method, a small amount of the primer composition which is to be applied on the lens can be taken out of a container then it is applied on the lens, and rest of the primer composition can be easily handled so that it does not contact with the air. Thus, even in case of a primer composition with a relatively high reactivity, the primer composition can be used stably for a long period of time.

On the other hand, a dip coat method is a method of which the optical substrate is immersed in the primer composition under the air atmosphere, thereby the primer layer is formed on the surface of the optical substrate. In case of a dip coat method, the optical substrate is immersed into a certain amount of the primer composition and then taken out, and this procedure is repeated. Hence, the primer composition tends to be exposed to the air for a long period of time. Thus, it is extremely difficult to handle the primer composition. In case a primer composition with a high reactivity is used, a usable period of the primer composition was shortened. According to the keen study by the present inventors, the primer compositions disclosed in Patent documents 1 and 2 included a moisture curing urethane having an isocyanate group, or included urethane resin having a reactive group such as silanol group and the like, thus, in some case, below described issues occurred. That is, regarding a known primer composition, when it is used for a long period of time, in some cases, the increased viscosity was confirmed, which made coating difficult.

As discussed in above, a spin coat method, a dip coat method, and so on have their own advantages as a coating method. It is not possible to stably produce a high-quality multilayer body for a long period of time by using the both methods and the conventional primer composition. Thus, particularly regarding the primer composition which forms a functional layer on the optical substrate, the primer composition which can enhance the adhesion between the optical substrate and the functional layer, and which can be used for a spin coat method and a dip coat method is demanded.

By developing the primer composition which can be used for a spin coat method and a dip coat method, more choices for methods for producing the multilayer body will be available, hence the productivity of the multilayer body can be improved. In addition, since the productivity of the multilayer body having the primer layer can be improved, the productivity of the multilayer body having the functional layer thereon (optical article) can be further improved as well.

Therefore, the object of the present invention is to provide a primer composition for an optical article which can improve the adhesion between an optical substrate and other layer when said other layer is formed on the optical substrate, and also to provide the primer composition for the optical article capable to be used for various different coating methods, further enables to stably produce a high-quality multilayer body for a long period of time.

The present inventors have carried out keen study to attain the above objects. The present inventors have studied a composition with an excellent long period stability by using the advantage of a curing type urethane, that is by using an effect which can improve the adhesion between the optical substrate and other layer. Further, the present inventors have studied a constitution of urethane prepolymer prior to curing, blending of a primer composition including the urethane prepolymer, and a blocking agent. As a result, by using a urethane prepolymer having a specific constitution and a specific structure, and by blending it in a predetermined ratio, the present inventors have found that the above-mentioned object can be attained, thereby the present invention has been achieved.

That is, the first aspect of the present invention is a primer composition for an optical article which includes;
a urethane prepolymer (A) including two or more isocyanate groups blocked by a blocking agent (hereinbelow, this may be simply referred as "urethane prepolymer (A)" or "component (A)"), which is a reaction product including a polyisocyanate compound (A1) having two or more isocyanate groups in a molecule (hereinbelow, this may be simply referred as "polyisocynate compound (A1)" or "component (A1)") and a polyol compound (A2) which is at least one selected from the group consisting of polycarbonate polyol, polyester polyol, and polycaprolactone polyol having two or more hydroxyl groups in a molecule (hereinbelow, this may be referred as "polyol compound (A2)" or "component (A2)");
an active hydrogen containing compound (B) which includes two or more active hydrogen functional groups including active hydrogen in a molecule (hereinbelow, this may be referred as "active hydrogen containing compound (B)" or "component (B)"); and
an organic solvent (C) which does not include active hydrogen (hereinbelow, this may be referred as "organic solvent (C)" or "component (C)"). Regarding the present invention, an excellent effect is exhibited particularly when a specific component (A2) is used, the component (A) having a plurality of isocyanate groups blocked by the blocking agent is used, and specific components (B) and (C) are included.

Also, in order to improve the adhesion property, preferably, the component (A) may be obtained by reacting the component (A1) and the component (A2) in a molar ratio that nA2 to nA1 (nA2/nA1) is within a range of 0.5 to 0.95, in which nA1 represents a total number of moles of the isocyanate groups included in the component (A1) and nA2 represents a total number of moles of the hydroxyl groups included in the component (A2). Hereinafter, the component (A) which is the reaction product made of the component (A1) and the component (A2) may be referred as "a first urethane prepolymer".

Also, the urethan prepolymer (A) may preferably be a reaction product of the polyisocyanate compound (A1), the polyol compound (A2), and a chain extender (A3) which includes two or more active hydrogen functional groups in a molecule (hereinbelow, this may be referred as "chain extender (A3)"). In this case, the component (A) may preferably be obtained by reacting the polyisocyanate compound (A1), the polyol compound (A2), and the chain extender (A3) in a ratio that a total of nA2 and nA3 to nA1 ((nA2 + nA3)/nA1)) is within a range of 0.5 to 0.95.

Further, in the first aspect of the present invention, for further improvement in stability, the component (A2) may have a number average molecular weight of preferably within a range of 300 to 10000.

Among these, in the first aspect of the present invention, a total number of moles of the active hydrogen functional groups included in the active hydrogen containing compound (B) may preferably be within a range of 0.1 to 1 mol when a total number of moles of the isocyanate groups blocked by the blocking agent included in the urethane prepolymer (A) is 1 mol.

Also, in order to improve both a long-term stability and the adhesion between the substrate and the functional layer, preferably the blocking agent in the component (A) may be at least one selected from the group consisting of alcohols, lactams, phenols, oximes, active methylene compounds, diester malonate-based compounds, and acetoacetic ester-based compounds.

Also, in order to particularly improve the adhesion property and the long-term stability, a molecular weight of the component (B) is within a range of 50 to 500 which is 0.01 to 1.0 times of a number average molecular weight of the polyol compounds (A2).

Also, to form even smoother primer layer, the first aspect of the present invention may further include a leveling agent (D).

Also, in order to further enhance the functionality, and to produce a high-quality photochromic multilayer body, the first aspect of the present invention may further include a photochromic compound (E).

The second aspect of the present invention is a multilayer body having a primer layer formed by curing the primer composition for the optical article on an optical substrate.

The third aspect of the present invention is an optical article having a photochromic layer including a photochromic compound on the primer layer of the multilayer body according to the second aspect of the present invention.

The fourth aspect of the present invention is a method of producing a multilayer body including a step of forming a primer layer obtained by curing the primer composition for the optical article according to the first aspect of the present invention on an optical substrate using a spin coat method or a dip coat method. By using the primer composition for the optical article according to the first aspect of the present invention, a coat layer having a long-term stability can be obtained even when a dip coat method is used for forming the coat layer. That is, even in case of a one-component type primer composition which is a mixture at least including the component (A), the component (B), and the component (C), the viscosity change can be made small for a long time.

By using the primer composition for the optical article of the present invention, the adhesion between the optical substrate and other layers, the adhesion between the optical substrate and the primer layer, and the adhesion between the primer layer and other layers can be improved. Further, the primer composition for the optical article according to the present invention can be used not only for a spin coat method, it can also be stably used for a dip coat method since it does not cause viscosity increase for long time. Thus, the value of industrial use can be increased.

### BREIF DESCRIPTION OF FIGURE

Figure is a schematic diagram of polyrotaxane monomer used in examples.

### DETAILED DESCRIPTION

A primer composition for an optical article according to the present invention includes;
a urethane prepolymer (A) including two or more isocyanate groups blocked by a blocking agent in a molecule, which is a reaction product of a polyisocyanate compound (A1) having two or more isocyanate groups in a molecule and a polyol compound (A2) which is at least one selected from the group consisting of polycarbonate polyol, polyester polyol, and polycaprolactone polyol having two or more hydroxyl groups in a molecule;
an active hydrogen containing compound (B) which includes two or more active hydrogen functional groups including active hydrogen in a molecule; and
an organic solvent (C) which does not include active hydrogen. Each component is described in below.

### Urethane Prepolymer (A) (Component (A))

In the present invention, a component (A) reacts with a component (B) and/or water (moisture) in the air and forms a main component of a primer layer at the end.

This component (A) includes at least two characteristics described in below. That is, one is that the component (A) is a reaction product of
a polyisocyanate compound (A1) having two or more isocyanate groups in a molecule (this may be referred as component (A1)), and
a polyol compound (A2) which is at least one selected from the group consisting of polycarbonate polyol, polyester polyol, and polycaprolactone polyol having two or more hydroxyl groups in a molecule (this may be referred as component (A2)); and also, the urethane prepolymer (A) has two or more isocyanate groups blocked using a blocking agent in a molecule. The component (A) is obtained by reacting the component (A1) and the component (A2) under the condition that the total number of moles of the isocyanate groups in the component (A1) is larger than the total number of moles of the hydroxyl groups in the component (A2), and then an isocyanate group at the end of the molecule is blocked using the blocking agent.

The ratio of the component (A) in the primer composition for the optical article may for example be within a range of 1 mass% or more and 50 mass% or less, preferably it may be within a range of 10 mass% or more and 30 mass% or less.

### [Component (A1):Polyisocyanate compound having two or more isocyanate groups in a molecule]

As the polyisocyanate compound (A1) having two or more isocyanate groups in a molecule, for example, aliphatic diisocyanate compounds, alicyclic diisocyanate compounds, aromatic diisocyanate compounds, and mixture there of may be used appropriately.

In the component (A1), the number of the isocyanate groups is not particularly limited, as long as two or more isocyanate groups are included in the molecule. Preferably, it may be within a range of 2 to 4, and more preferably 2 to 3. Particularly, considering the handling property, the viscosity, and so on, the number of the isocyanate groups in the molecule may preferably be 2.

As examples of the component (A1),
aliphatic diisocyanate compounds such as tetramethylene-1,4-diisocyanate, hexamethylene-1,6-diisocyanate, octamethylene-1,8-diisocyanate, 2,2,4-trimethylhexane-1,6-diisocyanate, and the like;
alicyclic diisocyanate compounds such as cyclobutane-1,3-diisocyanate, cyclohexane-1,3-diisocyanate, cyclohexane-1,4-diisocyanate, 2,4-methylcyclohexyldiisocyanate, 2,6-methylcyclohexyldiisocyanate, isophorone diisocyanate, norbornene diisocyanate, an isomer mixture of 4,4'-methylenebis(cyclohexylisocyanate), hexahydrotoluene-2,4-diisocyanate, hexahydrotoluene-2,6-diisocyanate, hexahydrophenylene-1,3-diisocyanate, hexahydrophenylene-1,4-diisocyanate, 1,9-diisocyanato-5-methylnonane, 1,2-bis(isocyanatomethyl)cyclohexane, 2-isocyanato-4-[(4-isocyanatocyclohexyl)methyl]-1-methylcyclohexa ne, 2-(3-isocyanatopropyl)cyclohexyl diisocyanate, norbornane diisocyanate, and the like; and
aromatic diisocyanate compounds such as
   phenylcyclohexylmethane diisocyanate, 4,4'-methylenebis(phenylisocyanate), an isomer mixture of 4,4'-methylenebis (phenylisocyanate), tolylene-2,3-diisocyanate, tolylene-2,4-diisocyanate, tolylene-2,6-diisocyanate, phenylene-1,3-diisocyanate, phenylene-1,4-diisocyanate, 1,3-bis(isocyanatomethyl)benzene, xylylene diisocyanate, tetramethylxylylene diisocyanate, 1,5-naphthalene diisocyanate, diphenylether diisocyanate, 1,3-diisocyanatomethylbenzene, 4,4'-diisocyanato-3,3'-dimethoxy(1,1'-biphenyl), 4,4'-diisocyanato-3,3'-dimethylbiphenyl, 1,2-diisocyanatobenzene, 1,4-bis(isocyanatomethyl)-2,3,5,6-tetrachlorobenzene, 2-dodecyl-1,3-diisocyanatobenzene, 1-isocyanato-4-[(2-isocyanatocyclohexyl)methyl]2-methylbenzene, 1-isocyanato-3-[(4-isocyanatophenyl)methyl)]-2-methylbenzene, 4-[(2-isocyanatophenyl)oxy]phenyl isocyanate, diphenylmethane diisocyanate, and the like; may be mentioned.

When tolylene diisocyanate is used, preferably a mixture of tolylene-2,4-diisocyanate (50 to 90 mass%) and tolylene-2,6-diisocyanate (10 to 50 mass%) may be preferably used. As the component (A1), the above-mentioned examples may be used alone, or two or more of these may be mixed and used.

Among these, preferably the aromatic diisocyanate compounds such as tolylene-2,4-diisocyanate, tolylene-2,6-diisocyanate, 4,4'-methylenebis(phenylisocyanate), an isomer mixture of 4,4'-methylenebis(phenylisocyanate), 1,5-naphthalene diisocyanate, tolidine diisocyanate, triphenylmethane triisocyanate, tetramethylxylylene diisocyanate, and the like;
the alicyclic diisocyanate compounds such as isophorone diisocyanate, norbornene diisocyanate, 1,2-bis(isocyanatomethyl)cyclohexane, cyclohexane-1,3-diisocyanate, cyclohexane-1,4-diisocyanate, and the like may be mentioned. By using these, the adhesion property can be improved and the hardness of the obtained coating film can be enhanced.

When the number of moles of the component (A) is 1, preferably a molar ratio of the component (A1) may be within a range of 0.5 to 0.9.

The ratio of the component (A1) in the primer composition for the optical article is for example within a range of 0.1 mass% or more and 20 mass% or less, and preferably it may be within a range of 1 mass% or more and 10 mass% or less.

### [Component (A2):Polyol compound which is at least one selected from the group consisting of polycarbonate polyol, polyester polyol, and polycaprolactone polyol having two or more hydroxyl groups in a molecule]

The component (A2) reacts with the isocyanate groups of the component (A1) and forms a polyurethane prepolymer precursor containing a urethane bond. In the present invention, the polyol compound (A2) which is at least one selected from the group consisting of polycarbonate polyol, polyester polyol, and polycaprolactone polyol having two or more hydroxyl groups in a molecule may be preferably used.

Among these, the polyol compound having 2 to 6 hydroxyl groups in a molecule may be preferably used, since the polyurethane prepolymer precursor obtained by reacting with the component (A1) attains an excellent coating property because the polyurethane prepolymer precursor is highly crosslinked and does not have a high viscosity. Considering the solubility to the organic solvent, the polyol compound having 2 to 4 hydroxyl groups in a molecule may be more preferably used.

It is thought that the primer composition for the optical article of the present invention can exhibit effects such as excellent adhesion property, long term storage stability, and resistance properties of the formed primer layer (difficulty to dissolve by solvent and polymerizable monomer and so on), due to the use of polycarbonate polyol, polyester polyol, and/or polycaprolactone polyol as the component (A2). By using polycarbonate polyol, polyester polyol, and/or polycaprolactone polyol as the component (A2), the obtained component (A) attains a high cohesiveness, thus the long-term storage stability, adhesion property, and resistance can be improved. Among these, in order to attain particularly excellent effects, a number average molecular weight of the component (A2) is preferably within a range of 300 to 10000, more preferably it may be within a range of 300 to 5000, and further preferably it may be within a range of 300 to 2000. When the number average molecular weight of the component (A2) is small, the ratio of the urethane bond in the component (A) can be increased, hence the adhesion property of the primer layer tends to increase. When the number average molecular weight of the component (A2) is too small, the long-term stability of the primer composition tends to decrease. The number average molecular weight of the component (A2) can be measured using a Gel Permeation Chromatography (GPC). Also, as the component (A2), only one of the above-mentioned compounds may be used, or two or more may be used together.

When the number of moles of the component (A) is 1, the component (A2) may preferably be within a range of 0.05 to 0.45 in terms of a molar ratio.

The ratio of the component (A2) in the primer composition for the optical article is, for example, within the range of 1 mass% or more and 30 mass% or less, preferably it may be within a range of 5 mass% or more and 20 mass% or less, and more preferably it may be within a range of 10 mass% or more and 15 mass% or less.

In below, each compound which may be used as the component (A2) is described in detail.

### <Polycarbonate Polyol>

As polycarbonate polyol used as the component (A2), for example, polycarbonate polyol which is obtained by phosgenation of one or more of low molecular weight polyols such as ethylene glycol, 1,2-propanediol, 1,3-propanediol, 2-methyl-1,3-propanediol, 1,2-butanediol, 1,3-butanediol, 1,4-butanediol, 1,5-pentanediol, 1,6-hexanediol, 1,8-octanediol, 1,9-nonanediol, 1,10-decanediol, 3-methyl-1,5-pentanediol, 2-ethyl-4-butyl-1,3-propanediol, diethylene glycol, dipropylene glycol, neopentyl glycol, cyclohexane-1,4-diol, cyclohexane-1,4-dimethanol, dimer acid diol, ethylene oxide or propylene oxide adducts of bisphenol A, bis(β-hydroxyethyl) benzene, xylylene glycol, glycerin, trimethylolpropane, pentaerythritol, and the like; or
polycarbonate polyol obtained using a transesterification method of ethylene carbonate, diethyl carbonate, and phenyl carbonate, and the like. Among the low molecular weight polyols, considering the adhesion property, more preferably the low molecular weight polyols having a linear alkyl chain may be used.

These polycarbonate polyols are easily obtained as reagents and for industrial use. As examples of commercially available polycarbonate polyols, "Duranol (registered trademark)" series manufactured by Asahi Kasei Chemicals Co.,Ltd., "Kuraray polyol (registered trademark)" series manufactured by Kuraray Co.,Ltd., "Plaxel (registered trademark)" series manufactured by Daicel Chemical Industry Co.,Ltd., "Nipporan (registered trademark)" series manufactured by Nippon Polyurethane Industry Co.,Ltd., "ETERNCOLL (registered trademark)" series manufactured by UBE Corporation, and the like may be mentioned.

### <Polyester Polyol>

As polyester polyols used as the component (A2), polyester polyols obtained by condensation reaction of polyvalent alcohols and polybasic acids may be mentioned.

Here, as the polyvalent alcohols, ethylene glycol, 1,2-propanediol, 1,3-butanediol, 1,4-butanediol, 3-methyl-1,5-pentanediol, 1,6-hexanediol, 3,3'-dimethylol heptane, 1,4-cyclohexanedimethanol, neopentyl glycol, 3,3-bis(hydroxymethyl) heptane, diethylene glycol, dipropylene glycol, glycerin, trimethylolpropane, and the like may be mentioned. These may be used alone, or two or more of these may be mixed for use. As the polyvalent alcohol, 3-methyl-1,5-pentanediol may be preferably used.

Also, as the polybasic acids, succinic acid, adipic acid, azelaic acid, sebacic acid, dodecanedicarboxylic acid, cyclopentanedicarboxylic acid, cyclohexanedicarboxylic acid, orthophthalic acid, isophthalic acid, terephthalic acid, naphthalenedicarboxylic acid, and the like may be mentioned. These may be used alone, or two or more of these may be mixed for use. As the polybasic acids, at least one selected from adipic acid and isophthalic acid may be preferably used.

These polyester polyols are easily obtained as reagents and for industrial use. As examples of commercially available polyester polyols, "Polylite (registered trademark)" series manufactured by DIC Corporation, "Nipporan (registered trademark)" series manufactured by Nippon Polyurethane Industry Co., Ltd., "Maximol (registered trademark)" series manufactured by Kawasaki Kasei Industrial Co., Ltd., and so on may be mentioned.

### <Polycaprolactone Polyol>

As polycaprolactone polyols used as the component (A2), polycaprolactone polyols such as poly-s-caprolactone, polycaprolactone diol, polycaprolactone triol, and the like may be mentioned. Specifically, a compound which is obtained by ring-opening polymerization of ε-caprolactone may be used.

These polycaprolactone polyols are easily obtained as reagents and for industrial use. As examples of commercially available polycaprolactone polyols, "Plaxel (registered trademark)" series manufactured by Daicel Chemical Industry Co., Ltd., and the like may be mentioned.

In the present invention, the isocyanate group at the terminal end of the precursor of the urethane prepolymer obtained by reacting only the component (A1) and the component (A2) is blocked using the blocking agent, thereby the component (A) (first urethane prepolymer) can be obtained. Note that, from the point of achieving even more excellent adhesion property, stronger resistance properties (difficulty to be dissolved by solvent and polymerizable monomer and so on) of the formed primer layer, and the like, the precursor of the urethane prepolymer may be preferably reacted with a chain extender (A3) before forming the first urethane prepolymer. That is, the component (A) is the urethane prepolymer having a blocked isocyanate group at the terminal end of the molecule.

Next, this chain extender (A3) is described.

### [Component (A3): Chain Extender]

The chain extender (A3) is used for polymerization of the component (A). By adjusting the molecular amount of the component (A), physical properties such as hardness, durability, and so on of the primer layer can be controlled.

In the present embodiment, the chain extender (A3) is a compound having two or more active hydrogen functional groups in a molecule. The active hydrogen functional group is a group including active hydrogen. Further, the active hydrogen functional group is capable of reacting with an isocyanate group. Specifically, a hydroxyl group, an amino group, a carboxyl group, and/or a thiol group, and so on may be mentioned. Particularly preferably, a hydroxyl group and/or an amino group may be mentioned. Also, the number of groups in the molecule capable of reacting with an isocyanate group may preferably be within a range of 2 to 6, and particularly preferably it may be 2.

As a compound including a hydroxyl group, considering the easiness to regulate the chain extending reaction (easiness to regulate the polymerization), preferably the compound may have a molecular weight within a range of 50 to 500, and the compound may include two hydroxyl groups. Specifically, alkylene glycols such as 1,2-propanediol, 1,3-propanediol, 1,3-butanediol, 1,4-butanediol, propylene glycol, 1,6-hexanediol, trimethylolpropane, and the like; polyalkyleneglycols such as polypropylene glycol, and the like may be mentioned.

Also, as the component (A3), a compound including two or more amino groups in a molecule can be used as well. Specifically, a diamine compound, a triamine compound, and so on can be used. As the component (A3) including the amino groups, only one type of compound may be used, or a plurality of compounds may be used together. As the compound including the amino groups, a molecular weight may preferably be within a range of 50 to 500, and the compound including amino groups may include two amino groups in the molecule. As examples of specific compounds, 3,3'-dichloro-4,4'-diaminodiphenylmethane, methylenedianiline, sodium chloride complex of methylenedianiline, isophoronediamine, bis-(4-aminocyclohexyl) methane, and norbornanediamine may be preferably used; and among these, 3,3'-dichloro-4,4'-diaminodiphenylmethane and bis-(4-aminocyclohexyl) methane may be mentioned.

Among these, the compound including hydroxyl groups may be preferably used as the component (A3). The blending amount of the component (A3) is not particularly limited, and when the total number of moles of the component (A) is 1 mol, then the component (A3) may preferably be within a range of 0.05 to 0.45 in a molar ratio. The ratio of the component (A3) in the primer composition for the optical article may for example be within a range of 0.01 mass% or more and 1 mass% or less, and preferably it may be 0.1 mass% or more and 0.5 mass% or less.

### Precursor of component (A) (Precursor before reacting with the blocking agent)

In the present invention, the first precursor which is obtained by reacting the component (A1) and the component (A2) (hereinafter, this reaction may be referred as "prepolymer reaction"), or the second precursor obtained by reacting the first precursor and the component (A3) is used as the precursor of the component (A).

When the first precursor is produced, the order of adding the first component (A1) and the second component (A2) for the reaction is not particularly limited. If needed, the component (A1) and the component (A2) may be additionally added during the reaction. The amount of the component (A1) is regulated so that the total molar ratio of the isocyanate groups of the component (A1) is overabundant in order to have an isocyanate group at the terminal end of the precursor.

Also, the amount and the type of the component (A3) are regulated so that the terminal end of the second precursor has an isocyanate group. The second precursor tends to be polymerized than the first precursor.

Also, in the present invention, the precursor of the component (A) may be the first precursor and/or the second precursor.

### <First Precursor>

In case of using the first precursor, preferably the first precursor is a reaction product which is obtained by reacting the component (A1) and the component (A2) so that the total number of moles of the isocyanate groups in the component (A1) and the total number of moles of the hydroxyl groups in the component (A2) satisfy a molar ratio (nA2/nA1) of less than 1. By satisfying the above range, the adhesion property can be improved. In order to further enhance this effect, the molar ratio (nA2/nA1) may preferably be within a range of 0.5 to 0.95, and even more preferably 0.5 to 0.9.

### <Second Precursor>

In case of using the second precursor, preferably, it may be a reaction product which is obtained by reacting the component (A1), the component (A2), and the component (A3) in a molar ratio that (nA2 + nA3)/nA1 is less than 1, in which
nA1 represents the total number of moles of the isocyanate groups included in the component (A1),
nA2 represents the total number of moles of the hydroxyl groups included in the component (A2), and
nA3 represents the total number of moles of the groups capable of reacting with the isocyanate groups in the component (A3). As the molar ratio (nA2 + nA3)/nA1 satisfies the above-mentioned range, the adhesion property can be improved. In order to further enhance this effect, the molar ratio may further preferably be within a range of 0.5 to 0.95, and even more preferably within a range of 0.5 to 09.

Further, in this case, when a total number of moles of nA2 and nA3 (nA2 + nA3) is 1, then nA2 may be within a range of 0.50 to 0.95, and nA3 may be within a range of 0.05 to 0.50; and more preferably nA2 may be within a range of 0.60 to 0.95, and nA3 may be within a range of 0.05 to 0.40.

Note that, when the compound including an amino group (-NH₂) is used as the component (A3), the number of the active hydrogens in the amino group would be 2, however as a number of the groups capable of reacting with an isocyanate group (that is, the active hydrogen containing functional group including active hydrogen), it is considered 1. Therefore, regarding the compound including the amino group (-NH₂), when 1 mol of the amino group exists, then it can be considered that the number of moles of the group capable of reacting with the isocyanate groups (that is, the number of moles of the active hydrogen containing functional groups including active hydrogen) is 1 mol.

### Method of Producing Precursor of Component (A)

For the reaction of the component (A1), the component (A2), and the component (A3) added depending on needs, a known method may be used. That is, the reaction may be performed using an organic solvent or without organic solvent under the inert gas atmosphere such as nitrogen, argon, and so on; and the reaction temperature may be within a range between room temperature (23°C) or higher and 130°C or lower. As mentioned in above, when the component (A1) and the component (A2) are only used, by reacting these as described in above, the first precursor can be obtained. In case of using the component (A3) in addition to the component (A1) and the component (A2), the first precursor and the component (A3) are reacted, and thereby the second precursor can be obtained.

By performing the reaction at a temperature of 130°C or lower, the decomposition of the component (A2) can be suppressed, and the desired first and second precursors can be obtained. The reaction time may vary depending on the ratio of the component (A1), the component (A2), and the component (A3), and also depending on the reaction temperature; and it may be within a range of 0.5 to 48 hours.

The organic solvent is not particularly limited, as long as it is an organic solvent which is used for prepolymer reaction. For example, acetone, methylethyl ketone, methylisobutyl ketone, diethyl ketone, cyclohexanone, dioxane, toluene, hexane, heptane, ethyl acetate, butyl acetate, dimethylformamide (DMF), tetrahydrofuran (THF), and so on may be used. As the organic solvent, two or more of these may be mixed for use. Among the above-mentioned organic solvents, the component (C) which is described in below may preferably be used.

For producing the first precursor, an amount of the organic solvent may preferably be between 10 parts by mass or more to 400 parts by mass or less with respect to 100 parts by mass of the total of the component (A1) and the component (A2). By using 400 parts by mass or less of the organic solvent, the adequate reaction time can be attained, and the decomposition of the component (A2) can be prevented. Also, by using 10 parts by mass or more of the organic solvent, the reaction speed is increased, and the reaction can be finished in short period of time. Also, when the second precursor is produced, the amount of the organic solvent may preferably be within a range of 10 parts by mass or more and 400 parts by mass or less with respect to 100 parts by mass of the total of the component (A1), the component (A2), and the component (A3), due to the same reasons mentioned in above.

When the above-mentioned prepolymer reaction is carried out, catalysts such as dibutyltin dilaurylate, dimethylimidazole, triethylenediamine, tetramethyl-1,6-hexanediamine, tetramethyl-1,2-ethanediamine, 1,4-diazabicyclo[2,2,2] octane, and the like may be used.

When the first precursor is produced, the amount of the catalyst may preferably be within a range of 0.001 to 3 parts by mass with respect to 100 parts by mass of the total of the component (A1) and the component (A2). When the second precursor is produced, the amount of the catalyst may preferably be within a range of 0.001 to 3 parts by mass with respect to 100 parts by mass of the total of the component (A1), the component (A2), and the component (A3).

Also, during the above-mentioned prepolymer reaction, in order to avoid the reaction from happening between the isocyanate groups of the component (A1) and water as one of the impurities, the component (A1), the component (A2), the component (A3) added depending on needs, the organic solvent, and the catalyst may preferably be dehydrated and thoroughly dried.

The component (A) is obtained by reacting the precursor having two or more isocyanate groups in a molecule with the blocking agent described in below.

### <Blocking Agent>

The blocking agent reacts with the precursor of the component (A) and forms the component (A). The blocking agent reacts with the terminal isocyanate group (R-NCO) of the precursor of the component (A), and forms the blocked isocyanate group (R-NH-CO-B: here, B represents the blocking agent). The blocked isocyanate group has no reactivity with the component (B). For example, the blocked isocyanate group releases the blocking agent at the terminal end by heating, and the isocyanate group can be restored.

Regarding the precursor of the component (A) mentioned in the above, the isocyanate group is not blocked by the blocking agent. When such precursor of a urethane prepolymer of non-blocked type is used as the primer composition for a dip coat method, due to a high reactivity of the primer composition, a pot life is short while coating, and it may not last a day for normal use. On the other hand, the primer composition according to the present invention uses the urethane prepolymer in which the isocyanate groups are blocked using the blocking agent. By heating this blocked type urethane prepolymer, the blocking agent is released, and the urethane prepolymer can react with the active hydrogen. Hence, the pot life can be extended to about two weeks or so. Also, since a specific component (A2) is included and the component (A) is obtained by reacting each component in a specific blending ratio, the adhesion between the optical substrate and the functional layer can be enhanced.

In the present invention, the blocking agent which is reacted with the precursor of the component (A) is not particularly limited, and any known compounds can be used. Specifically, the blocking agent may preferably include at least one compound selected from the group consisting of alcohols, lactams, phenols, oximes, active methylene compounds, diester malonate-based compounds, and acetoacetic ester-based compounds.

Further, this blocking agent is a compound including a group (active hydrogen group) capable of reacting with the isocyanate group included in the precursor of the component (A). Preferably, the blocking agent may be blended such that the total number of moles of the groups included in the blocking agent which can react with the isocyanate groups is larger than the number of moles of all of the isocyanate groups included in the precursor of the component (A). Thereby, the reaction may be carried out. By doing so, the isocyanate groups of the precursor of the component (A) can be completely blocked using the blocking agent. The unreacted blocking agent may be removed from the obtained component (A). That is, in the component (A), preferably all of the isocyanate groups may react with the blocking agent.

Also, as the blocking agent, a single blocking agent may be used, or two or more may be used together. The blocking agent preferably may have one group (active hydrogen functional group) capable of reacting with an isocyanate group. Hereinbelow, various compounds which can be used as the blocking agent are described in detail.

As alcohols, for examples, aliphatic alcohols such as methanol, ethanol, 2-propanol, n-butanol, sec-butanol, 2-ethyl-1-hexanol, 2-methoxyethanol, 2-ethoxyethanol, 2-butoxyethanol, and the like may be mentioned.

As lactams, for example, γ-butyrolactam, ε-caprolactam, γ-valerolactam, and the like may be mentioned.

As phenols, for example, phenol, cresol, ethylphenol, styrenated phenol, hydroxybenzoic acid ester, mono and dialkylphenols which include alkyl group with 4 or more carbon atoms as a functional group, and the like may be mentioned. Specifically, monoalkyl phenols such as n-propylphenol, i-propylphenol, n-butylphenol, sec-butylphenol, t-butylphenol, n-hexylphenol, 2-ethylhexylphenol, n-octylphenol, n-nonylphenol, and the like; and dialkylphenols such as di-n-propylphenol, diisopropylphenol, isopropylcresol, di-n-butylphenol, di-t-butylphenol, di-sec-butylphenol, di-n-octylphenol, di-2-ethylhexylphenol, di-n-nonylphenol, and the like may be mentioned.

As oximes, for example, acetoxime, methylethylketoxime, methylisobutylketooxime, diethylketoxime, cyclopentanone oxime, cyclohexanone oxime, and the like may be mentioned.

As the active methylene compound, diester malonate compounds, ester acetoacetate compounds, and the like may be mentioned.

As the diester malonate compounds, dimethyl malonate, diethyl malonate, diisopropyl malonate, di-n-propyl malonate, di-n-butyl malonate, ethyl n-butyl malonate, methyl n-butyl malonate, ethyl t-butyl malonate, methyl t-butyl malonate, diethyl methyl malonate, dibenzyl malonate, diphenyl malonate, benzylmethyl malonate, ethylphenyl malonate, t-butylphenyl malonate, isopropyridene malonate, and the like may be mentioned. One of these may be used alone, or two or more among these may be mixed and used.

As the ester acetoacetate compounds, methyl acetoacetate, ethyl acetoacetate, isopropyl acetoacetate, n-propyl acetoacetate, t-butyl acetoacetate, n-butyl acetoacetate, benzyl acetoacetate, phenyl acetoacetate, and the like may be mentioned. One of these may be used alone, or two or more among these may be mixed and used.

In the present invention, in addition to these, acid amides, imidazoles, pyridines, amines, and the like can also be used as the blocking agent. Note that, the blocking agents mentioned in above may preferably be used.

Among the above-mentioned blocking agents, the blocking agent which include phenols, oximes, active methylene compounds, diester malonate compounds, and/or ester acetoacetate compounds may preferably be used; and diester malonate compounds and/or ester acetoacetate compounds may be particularly preferably used. The reason for this is as described in below. From the point of a heat resistance of the optical substrate, when the primer layer is being formed, it is preferably cured at low temperature (60°C to 140°C), hence the above-mentioned blocking agent that can be released at low temperature is preferable.

The ratio of the blocking agent in the primer composition for the optical article is for example within a range of 0.1 mass% or more and 10 mass% or less, and preferably within a range of 0.5 mass% or more and 5 mass% or less.

### (Reaction between Precursor of Component (A) and Blocking Agent; Production of Component (A))

A method of reacting the precursor of the component (A) and the blocking agent is not particularly limited, and the precursor of the component (A) and the blocking agent may be mixed. The reaction between the isocyanate group in the precursor of the component (A) and the blocking agent may be carried out using a known method. For example, the reaction may be carried out using an organic solvent or without organic solvent under the inert gas atmosphere such as nitrogen, argon, and so on; and the reaction temperature may be within a range between room temperature (23°C) or higher and 130°C or lower. By carrying out the reaction at a temperature of 130°C or lower, decomposition of the urethane prepolymer can be suppressed, and the desired component (A) can be obtained. Also, the reaction time may vary depending on the ratio of each component and the reaction temperature; and it may be within a range of 0.5 to 48 hours.

The organic solvent is not particularly limited, as long as it is the organic solvent used for a blocking reaction. For example, organic solvents such as acetone, methylethyl ketone, methylisobutyl ketone, diethyl ketone, cyclohexanone, dioxane, toluene, hexane, heptane, ethyl acetate, butyl acetate, dimethylformamide (DMF), tetrahydrofuran (THF), and so on may be used. The organic solvent can be used by mixing two or more of these. Among these, it may preferably be the component (C) which is described in below.

When carrying out the reaction with the blocking agent, catalysts such as dibutyltin dilaurate, dimethylimidazole, triethylenediamine, tetramethyl-1,6-hexanediamine, tetramethyl-1,2-ethanediamine, 1,4-diazabicyclo[2,2,2] octane, and the like may be used. When the catalyst is used, the amount of the catalyst may preferably be within a range of 0.001 to 3 parts by mass with respect to 100 parts by mass of the total of the precursor of the component (A) and the blocking agent.

Also, when the reaction with the blocking agent is carried out, in order to avoid the reaction from happening between the isocyanate group and water as one of the impurities, the precursor of the component (A), the blocking agent, the organic solvent, and the catalyst may preferably be dehydrated and thoroughly dried.

### Component (A); Characteristics of Urethane Prepolymer

In the present invention, as already mentioned, the component (A) obtained by reacting the blocking agent and the first precursor formed of the component (A1) and the component (A2) may be referred as the first urethane prepolymer. Also, the component (A) obtained by reacting the blocking agent and the second precursor as a reaction product obtained by further using the component (A3) may be referred as the second urethane prepolymer. Further, in case of referring to both of these, it may be simply referred as the component (A) and the urethane prepolymer (A).

The urethane prepolymer (A) is not particularly limited, and preferably it may have the following properties. For the primer composition for the optical article to attain a viscosity which is easy to coat, to form a flat primer layer, and to ensure layer thickness, the number average molecular weight of the urethane prepolymer (A) may preferably be within a range of 800 to 100000. In order to further exhibit such effects, more preferably the number average molecular weight of the urethane prepolymer (A) may be within a range of 900 to 100000, and even more preferably within a range of 1000 to 100000. Even in case of producing the primer layer by polymerizing the urethane prepolymer using the component (B) and/or moisture in the air after releasing of the blocking agent by heating, the number average molecular weight of the urethane prepolymer (A) prior to the polymerization is preferably within a range of 800 to 100000. Particularly in case other layers (for example, a hard coat layer, a photochromic layer and so on) are stacked on the primer layer, a solvent resistance against the solvent is enhanced, and the multilayer body with even better appearance can be formed. Note that, the number average molecular weight of the component (A) is a value obtained using a method (Gel Permeation Chromatography (GPC)) described in below examples.

Next, the component (B) is described. In the present invention, the component (B) reacts with the component (A) (more accurately, the blocking agent is released and the isocyanate groups of the component (A) and the component (B) react with each other). The component (B) reacts with the component (A) after the blocking agent has been released, and forms the urethane polymer.

### <Component (B): Active hydrogen containing compound having two or more active hydrogen functional groups including active hydrogen in a molecule>

In the present invention, the component (B) is an active hydrogen containing compound having two or more active hydrogen functional groups including active hydrogen in a molecule.

The component (B) may preferably have a molecular weight within a range of 50 to 500 which is relatively small, and more preferably it may be within a range of 50 to less than 300. When the molecular weight of the component (B) is small, the adhesion property of the primer layer tends to improve. Further, the molecular weight of the component (B) may preferably be within a range of 0.01 to 1 times of the number average molecular weight of the polyol compound (A2), and preferably it is smaller than the number average molecular weight of the polyol compound (A2). By satisfying the above conditions, the adhesion property of the primer layer can be further enhanced.

The component (B) is an active hydrogen containing compound having two or more active hydrogen functional groups including active hydrogen in a molecule. The active hydrogen functional group is a functional group capable of reacting with an isocyanate group. As the active hydrogen functional group, a hydroxyl group, an amino group, a carboxyl group, and/or a thiol group may be mentioned. A single compound of the component (B) may be used alone, or two or more compounds may be used together. As the component (B), the same component as the above-mentioned component (A3) may be used, and it may also be different from the component (A3). In below, various compounds which may be used as the component (B) are described in detail.

### (Compound including a hydroxyl group)

In the present invention, specific examples of the compound including the hydroxyl group may include, low molecular weight polyol compounds such as, ethylene glycol, 1,2-propanediol, 1,3-butanediol, 1,4-butanediol, 3-methyl-1,5-pentanediol, 1,6-hexanediol, 3,3'-dimethylol heptane, 1,4-cyclohexanedimethanol, neopentyl glycol, 3,3-bis(hydroxymethyl) heptane, diethylene glycol, dipropylene glycol, glycerin, trimethylolpropane, pentaerythritol, 1,2,4-butanediol, 1,2,6-hexanetriol, and the like. As the compound including a hydroxyl group, it may be same as the component (A2) or it may be different.

When such compound including a hydroxyl group is used, more preferably, the compound (B) is a compound having 2 or more and 4 or less active hydrogen functional groups in a molecule. Further preferably, it may be a compound having two or more and 3 or less active hydrogen functional groups in a molecule.

### (Compound including an amino group)

In the present invention, specific examples of a compound including an amino group includes diamine compounds and triamine compounds such as isophorone diamine, ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, piperazine, N,N-bis-(2-aminoethyl) piperazine, bis-(4-aminocyclohexyl) methane, bis-(4-amino-3-butylcyclohexyl) methane, 1,2-diaminocyclohexane, 1,3-diaminocyclohexane, 1,4-diaminocyclohexane, norbornenediamine, hydrazine, dihydrazine adipate, phenylenediamine, 4,4'-diphenylmethanediamine, N,N'-diethyl ethylenediamine, N,N'-dimethyl ethylenediamine, N,N'-dipropylethylenediamine, N,N'-dibutylethylenediamine, and the like.

As the compound including the amino group, a compound including both the hydroxyl group and the amino group can be used as well. Specifically, amino alcohols such as 2-aminoethanol, 3-aminopropanol, 4-aminobutanol, 5-aminopentanol, 6-aminohexanol, 2-piperidinemethanol, 3-piperidinemethanol, 4-piperidinemethanol, 2-piperidineethanol, 4-piperidineethanol, and the like may be mentioned.

Further, as the compound including the amino group, a compound including both the amino group and the carboxyl group may be used. Specifically, aminocarboxylic acid such as, glycine, alanine, lysine, leucine, and the like may be mentioned.

Other than this, as the compound including the amino group, a compound including both the amino group and a thiol group may be used as well. Specifically, amino thiols such as 1-aminothiol, 2-aminoethanethiol, and the like may be mentioned.

The compound including the amino group as mentioned in above may be used alone, or two or more may be mixed. When such compound including the amnio group is used, more preferably the component (B) is a compound having 2 or more and 3 or less active hydrogen functional groups in a molecule. Further preferably, it may be a compound having 2 active hydrogen functional groups in a molecule.

The blending amount of the component (B) may preferably be adjusted so that the total number of moles of the active hydrogen functional groups included in the component (B) may be the same or less than the total number of moles of the isocyanate groups included in the component (A) which are blocked by the blocking agent. That is, when the total number of moles of the isocyanate groups included in the component (A) which are blocked by the blocking agent is 1 mol, preferably, the total number of moles of the active hydrogen functional groups included in the component (B) may be within a range of 0.1 to 1 mol, and more preferably within a range of 0.2 to 0.9 mol. Thereby, the primer layer having desired hardness and durability can be obtained.

That is, the isocyanate groups restored in the component (A) and the active hydrogen functional groups included in the component (B) react with each other and forms the primer layer. When the total number of moles of the active hydrogen functional groups included in the component (B) is smaller than the total number of moles of the isocyanate groups included in the component (A) which is blocked by the blocking agent, the isocyanate groups which did not react with the component (B) are thought to react with moisture and so on in the air. As such, in regards with the restored isocyanate groups of the component (A), by regulating the ratio of ones which react with the component (B) and ones which react with the moisture in the air, the hardness and the durability of the formed primer layer can be adjusted, or the properties such as the adhesion property and so on can also be changed. When the ratio of the component (B) is high within the above-mentioned range, the durability of the primer layer tends to enhance. When the ratio of the component (B) is low within the above-mentioned range, the adhesion property of the primer layer tends to be high.

The ratio of the component (B) in the primer composition for the optical article may for example be within a range of 0.01 mass% or more and 1 mass% or less, and preferably within a range of 0.1 mass% or more and 0.5 mass% or less.

Note that, when the active hydrogen functional group of the component (B) is an amino group (-NH₂), the number of moles of the active hydrogen functional groups is considered as the same as in case of the component (A3) described in above.

### <(C) Organic solvent which does not include active hydrogen group>

In the present invention, the component (C) is an organic solvent which does not include an active hydrogen group. By using the organic solvent which does not include the active hydrogen group, the reaction with the organic solvent can be prevented when the part of the above-mentioned component (A) blocked by the blocking agent is released. If such organic solvent is not used, a storage stability of the primer composition for the optical article cannot be enhanced. As such organic solvents, examples of a compound which can be suitably used as the component (C) include acetone, methylethyl ketone, methylisobutyl ketone, diethyl ketone, cyclohexanone, dioxane, toluene, hexane, heptane, ethyl acetate, butyl acetate, dimethylformamide (DMF), tetrahydrofuran (THF), and the like. As such organic solvents, two or more organic solvents shown in above can be mixed and used.

In the present invention, the blended amount of the component (C) is not particularly limited, and it may be within a range of 100 to 2000 parts by mass per 100 parts by mass of the total of the component (A) and the component (B). By satisfying this range, viscosity can be adjusted easily for obtaining a desired coating film thickness after coating. In the present invention, in order to uniformly disperse the component (A) and the component (B) to obtain a smooth coating film after coating, the blending amount of the component (C) may more preferably be within a range of 100 to 1000 parts by mass per 100 parts by mass of the total of the component (A). Note that, when the component (C) is used as the organic solvent while producing the component (A), the used amount of the organic solvent is considered to be included in the blending amount of said organic solvent.

The ratio of the component (C) in the primer composition for the optical article may for example be within a range of 30 mass% or more and 95 mass% or less, and preferably within a range of 60 mass% or more and 90 mass% or less.

The primer composition for the optical article according to the present invention includes the above-mentioned component (A), the component (B), the component (C) as essential components. Further, the primer composition for the optical article according to the present invention may preferably also include below described additive components. That is, a leveling agent (D) and a photochromic compound (E). Next, these additive components are described.

### Leveling Agent (D)

The primer composition for the optical article of the present invention may preferably include a leveling agent in order to improve the smoothness of the obtained primer layer. As such component, surfactants may be mentioned. As the surfactants, known surfactants may be used without any limitation. For example, silicone surfactants, fluorine-containing surfactants, and the like can be mentioned. As specific example of silicone surfactants and fluorine-containing surfactants, "L-7001", "L-7002", "L-7604", "FZ-2123", and "FZ2104" made by Dow Corning Toray Co., Ltd.; "MEGAFACE F-470", "MEGAFACE F-1405", and "MEGAFACE F-479" made by DIC CORPORATION; "Florade FC-430" made by SUMITOMO 3M LTD.; and the like can be mentioned. When the surfactant is used, two or more may be mixed for use.

In the present invention, the blending amount of the component (D) is not particularly limited; and it may preferably be within a range of 0.001 to 1 parts by mass and more preferably 0.01 to 0.5 parts by mass per 100 parts by mass of the total of the component (A) and the component (B).

### Photochromic Compound (E)

In the present invention, a photochromic compound may be preferably blended. By blending the photochromic compound, a primer layer having photochromic properties can be formed. By forming a photochromic layer on the primer layer having photochromic properties, a color optical density and a temperature dependency of the photochromic properties of the multilayer body can be improved. In this case, the photochromic compound blended in the primer layer may preferably be the same photochromic compound included in the photochromic layer. Alternatively, the primer layer can be used as the photochromic layer, thus the photochromic layer may not be formed.

The component (E) is not particularly limited, and any known photochromic compounds may be used. For example, photochromic compounds such as flugid compounds, spirooxazine compounds, chromene compounds, and the like may be mentioned. Among these photochromic compounds, the chromene based compounds may be particularly preferably used, since it has higher durability of the photochromic properties compared to other photochromic compounds, and also has particularly excellent color optical density and fading speed of the photochromic properties compared to other photochromic compounds.

As specific examples of the chromene based photochromic compounds which can be suitably used in the present invention, the followings may be mentioned.

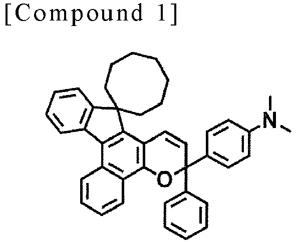

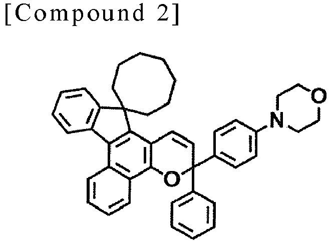

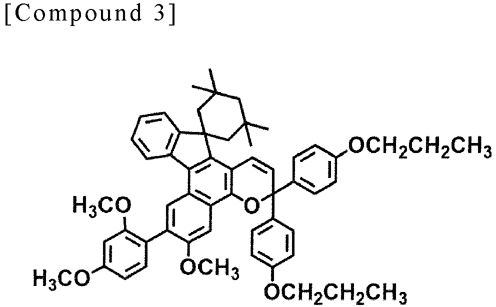

The photochromic compound (E) may be used by mixing a plurality of types to obtain the desired color tone.

In the present invention, the blending amount of the component (E) is not particularly limited, and it may preferably be within a range of 0.1 to 20 parts by mass, and more preferably within a range of 1 to 15 parts by mass per 100 parts by mass of the total of the component (A) and the component (B).

The primer composition for the optical article according to the present invention includes the component (A), the component (B), and the component (C) which are mentioned in above as essential components. Also, the primer composition for the optical article according to the present invention may preferably further include the below described additive components.

### [Other additive components]

In addition to the above-mentioned components, within the range which does not compromise the effects of the present invention, the primer composition for the optical article according to the present invention may include, various known agents, for example, various stabilizers such as ultraviolet ray absorbing agents, infrared ray absorbing agents, UV stabilizers, antioxidants, colorants, antistatics, fluorescent dyes, dyes, pigments, fragrances, and so on; additive agents; silane coupling agents, glycidyl compounds, photochromic compounds; and so on.

The amount of the above-mentioned additive components may be within a range which does not compromise the effects of the present invention. Specifically, a total amount of the additive components may preferably be within a range of 0.001 to 20 parts by mass with respect to 100 parts by mass of the total of the component (A) and the component (B).

The silane coupling agent is not particularly limited, and known compounds may be used. Among these, a compound including a hydrolyzable group and an alkoxy group may be preferably used, and more preferably a compound of which two or more alkoxy groups are bonded to silicon atoms may be preferably used.

As specific examples, γ-glycidoxypropyltrimethoxysilane, γ-glycidoxypropylmethyldimethoxysilane, γ-glycidoxypropylmethyldiethoxysilane, γ-glycidoxypropyltriethoxysilane, 5,6-epoxyhexyltriethoxysilane, β-(3,4-epoxycyclohexyl)ethyltrimethoxysilane, tetraethoxy silane, a tetramer of tetramethoxysilane, a pentamer of tetraethoxysilane, vinyltrimethoxysilane, vinyltriethoxysilane, vinyltriacetoxy silane, methyltrimethoxysilane, methyltriethoxysilane, methyltriphenoxysilane, dimethyldimethoxy silane, trimethylmethoxysilane, phenyltrimethoxysilane, diphenyldimethoxysilane, cyclohexylmethyldimethoxysilane, 1,2-bis(trimethoxysilyl)ethane, 1,2-bis(triethoxysilyl)ethane, 1,3-bis(trimethoxysilyl)propane, 1,3-bis(triethoxysilyl)propane, 1,6-bis(trimethoxysilyl)hexane, 1,6-bis(triethoxysilyl)hexane, n-propyltrimethoxysilane, n-butyltrimethoxysilane, isobutyltrimethoxysilane, isobutyltriethoxysilane, n-hexyltrimethoxysilane, n-hexyltriethoxysilane, n-octyltriethoxysilane, n-decyltrimethoxysilane, 3-ureidopropyltriethoxysilane, bis[3-(diethoxymethylsilyl)propyl]carbonate, trifluoropropyltrimethoxysilane, perfluorooctylethyltriethoxysilane, γ-chloropropyltrimethoxysilane, vinyltri(β-methoxy-ethoxy)silane, allyltrimethoxysilane, γ-acryloxypropyltrimethoxysilane, γ-acryloxypropyltriethoxysilane, γ-methacryloxypropyltrimethoxysilane, γ-methacryloxypropyltriethoxysilane, γ-methacryloxypropyldimethoxymethylsilane, γ-mercaptopropyltrialkoxysilane, γ-aminopropyltrimethoxysilane, γ-aminopropyltriethoxysilane, N-phenyl-γ-aminopropyltrimethoxysilane, N-2(aminoethyl)3-aminopropyltriethoxysilane, N-2(aminoethyl)3-aminopropyltrimethoxysilane, N-2(aminoethyl)3-aminopropylmethyldimethoxysilane, p-styryltrimethoxysilane, 3-isocyanatepropyltriethoxysilane, a compound in which part or all of the hydrolyzable groups of the above-mentioned silane compound being hydrolyzed or partially condensed; and the like may be mentioned.

Among these, as the silane coupling agent for improving the adhesion property, γ-glycidoxypropyltrimethoxysilane, γ-glycidoxypropyltriethoxysilane, γ-glycidoxypropylmethyldimethoxysilane, γ-glycidoxypropylmethyldiethoxysilane, and the like may be preferably used.

Note that, single type of the above-mentioned silane coupling agents may be used, and also two or more types may be used together.

The blending amount of the silane coupling agent is not particularly limited as long as the effects of the present invention are not compromised. For example, the blending amount of the silane coupling agent may preferably be within a range of 0.001 to 20 parts by mass, and even more preferably within a range of 0.01 to 10 parts by mass with respect to 100 parts by mass of the total of the component (A) and the component (B).

Also, the glycidyl compounds which is preferably blended is not particularly limited, and known compounds including a glycidyl group may be used. As specific examples, methoxypolyethylene glycolmethacrylate (particularly, an average molecular weight of 293), methoxypolyethylene glycolmethacrylate (particularly, an average molecular weight of 468), methoxypolyethylene glycolacrylate (particularly, an average molecular weight of 218), methoxypolyethylene glycolacrylate (particularly, an average molecular weight of 454), stearyl methacrylate, lauryl methacrylate, methyl acrylate, ethyl acrylate, butyl acrylate, octyl acrylate, lauryl acrylate, γ-methacryloyloxypropyltrimethoxysilane, γ-methacryloyloxypropylmethyldimethoxysilane, glycidylmethacrylate, and the like may be mentioned.

The blending amount of the glycidyl compound is not particularly limited as long as the effects of the present invention are not compromised. For example, it may be within a range of 0.001 to 20 parts by mass, and more preferably within a range of 0.01 to 10 parts by mass with respect to 100 parts by mass of the total of the component (A1) and the component (A2).

Additionally, in the present invention, the UV stabilizers may be preferably used, since when the UV stabilizers are used, the durability of the primer layer can be improved. As such UV stabilizers, a hindered amine photo stabilizer, a hindered phenol antioxidant, an iodine-based antioxidant, and the like are known. As the preferable UV stabilizers, bis(1,2,2,6,6-pentamethyl-4-piperidyl) sebacate; ADK STAB LA-52, LA-57, LA-62, LA-63, LA-67, LA-77, LA-82, and LA-87 made by ADEKA CORPORATION; 2,6-di-t-butyl-4-methyl-phenol; ethylene bis(oxyethylene)bis[3-(5-t-butyl-4-hydroxy-m-tolyl) propionate]; IRGANOX 1010, 1035, 1075, 1098, 1135, 1141, 1222, 1330, 1425, 1520, 259, 3114, 3790, 5057, and 565 made by Ciba Specialty Chemicals; and the like may be mentioned.

The blending amount of the UV stabilizer is not particularly limited as long as the effects of the present invention are not compromised. For example, it may be within a range of 0.001 to 10 parts by mass, and more preferably within a range of 0.01 to 5 parts by mass with respect to 100 parts by mass of a total of the component (A) and the component (B).

### (Method of Producing Primer Composition for Optical Article)

The primer composition for the optical article may be preferably produced using the following method. First, the first precursor is obtained by reacting the component (A1) and the component (A2). Alternatively, the second precursor is obtained by reacting the first precursor and the component (A3). Here, the first precursor and the second precursor may preferably be produced in the organic solvent which is the component (C). Next, the first precursor or the second precursor is reacted with the blocking agent, thereby the first urethane prepolymer or the second urethane prepolymer is produced.

Further, the obtained first or the second urethane prepolymer is mixed with the component (B), and with the component (C) depending on the needs, to obtain the desired primer composition for the optical article. Regarding the component (C), preferably the organic solvent used during the reaction for producing the first or second precursor, and during the production of the first or second urethane prepolymer may be the component (C). Further, in the primer composition for the optical article, as long as the amount of the component (C) is within a range of the target amount, the component (C) may be used as it is. In case the amount of the component (C) used as the reaction solvent for the reaction is larger than the target amount, then the reaction solvent may be removed by condensation and so on. On the other hand, when the amount of the component (C) is smaller than the target amount, then the component (C) may be added.

When the component (B) is added, and also the component (C) is added depending on needs to the first or second urethane prepolymer, the component (D), the component (E), and other additives may also be blended if needed.

The primer composition for the optical article according to the present invention can be produced as discussed in above. The viscosity at 23°C of the primer composition for the optical article is not particularly limited, and it may preferably be within a range of 1 mPa · c to 250 mPa · c, and more preferably within a range of 1 mPa · c to 150 mPa · c. The viscosity can be adjusted by changing the type and the amount of the component (C).

Note that, although it is not particularly limited, after the production, the obtained primer composition for the optical article may preferably be stored under inert gas atmosphere in a temperature range of -20 to 25°C. Under such condition, the viscosity of the primer composition for the optical article according to the present invention barely changes for about two weeks.

### <Optical Substrate>

The primer composition for the optical article according to the present invention may for example be used as a coating layer and the like on the surface of the optical substrate. For example, as the optical substrate, a plastic lens substrate may be mentioned. The plastic lens substrate is not particularly limited, and known substrates may be used. For example, thermoplastic resin lens such as (meth)acrylic resin, polycarbonate resin, and the like; crosslinkable resin lens such as a polyfunctional (meth)acrylic resin, an allyl resin, a thiourethane resin, a urethane resin, a thioepoxy resin, and the like may be mentioned. Also, the primer composition for the optical article according to the present invention may also be used to a plastic lens substrate of which the hard coat layer and so on are stacked on said plastic lens substrates.

According to the present invention, in case the primer layer made of the primer composition for the optical article of the present invention is formed on the optical substrate, preferably a known pre-treatment may be performed to the optical substrate in order to improve the adhesion property of the primer layer. As the pre-treatment, a degreasing treatment using an organic solvent, a chemical treatment using basic aqueous solution or acidic aqueous solution, a polishing treatment using a polisher, a plasma treatment using an atmospheric plasma or low-pressure plasma, a corona discharge treatment, a flame treatment, UV ozone treatment, and the like can be mentioned. Among these, from the point of improving the adhesion between the optical substrate and the primer layer, preferably the primer layer may be formed on the optical substrate which has been performed with a degreasing treatment using an organic solvent, an alkaline treatment, a polishing treatment, a plasma treatment, a corona discharge treatment, a UV ozone treatment, or combination of these.

### <Method of Forming Primer Layer on Optical Substrate>

The primer composition for the optical article is coated on the optical substrate, then the coating formed on the optical substrate is dried for curing. Thereby, the primer layer is formed. A method of coating the primer composition for the optical article is not particularly limited. The primer composition for the optical article according to the present invention has a good long term storage stability (small viscosity change), thus it can be used for a spin coat method and also for a dip coat method.

As a method of forming the coating layer using a dip coat method, a known method can be used. Specifically, the optical substrate may be immersed in the primer composition for the optical article of the present invention, then the optical substrate may be taken out. When the coating layer is formed using a spin coat method, a known method can be used. As the method of forming the primer layer using a dip coat method or a spin coat method, there is no particular limitation, and preferably the primer layer may be formed under below described conditions. Specifically, a drying temperature of the coating layer may be within a range of 60 to 120°C, and a drying temperature may be within a range of 0.5 to 6 hours. By carrying out a curing reaction under such conditions, the blocking agent of the component (A) is released, and the component (A) which the isocyanate group has been restored reacts with the component (B), and if necessary, with the moisture in the air, thereby the primer layer can be formed. A thickness of the primer layer is not particularly limited, and it may be within a range of 1 to 10 µm. When the thickness of the primer layer is within such range, the adhesion property can be improved.

### (Forming Photochromic Layer)

In the present invention, the primer layer formed by curing the primer composition for the optical article of the present invention is formed on the optical substrate using the above-mentioned method, then a photochromic layer including the photochromic compound may be formed on the primer layer. Next, the case of forming this photochromic layer is described. The photochromic layer may preferably be formed using a photochromic curable composition which includes the photochromic compound. The photochromic layer is formed on the primer layer. By using such primer layer, the adhesion between the optical substrate and the photochromic layer can be improved.

### (Photochromic Curable Composition)

The photochromic curable composition is not particularly limited and a known composition can be used as long as it is a photochromic curable composition which includes a photochromic compound. For example, the photochromic curable composition may include a photochromic compound, a polymerizable monomer, and a polymerization initiator.

As the used photochromic curable composition, a photochromic (meth)acrylate curable composition, a photochromic polyurethane curable composition, a photochromic polyurethane urea curable composition, a photochromic epoxy resin, a photochromic polycarbonate resin, a photochromic allyl curable composition, and the like can be used. Among these, a photochromic (meth)acrylate curable composition, a photochromic polyurethane curable composition, a photochromic polyurethane urea curable composition may be preferably used from the point of the photochromic property and a layer hardness of the photochromic layer. Among these, particularly preferably a photochromic (meth)acrylate curable composition may be used since good photochromic property and hardness can be attained.

The photochromic (meth)acrylate curable composition usually includes the photochromic compound (E), a radical polymerizable monomer (b), and a photopolymerization initiator (c).

As the photochromic compound (E), the same compound described in the component (E) of the primer composition for the optical article can be used for the same reasons. The photochromic compound (E) may be used by mixing plurality of types in order to obtain the desired color tone. Particularly, when the primer layer includes the photochromic compound, a compound which is the same type (the same compound) as said photochromic compound included in the primer layer may preferably be used.

The blending amount of the photochromic compound (E) in the photochromic (meth)acrylate curable composition may preferably be within a range of 0.1 to 20 parts by mass, more preferably within a range of 0.5 to 15 parts by mass, and most preferably within a range of 1 to 10 parts by mass with respect to 100 parts by mass of the radical polymerizable monomer which is described in below. By satisfying such range, a sufficient color optical density can be attained, and also the photochromic compound can be easily dissolved uniformly in the radical polymerizable monomer. Thus, uniform and sufficient color optical density can be attained easily.

### [Radical Polymerizable Monomer (b)]

The above-mentioned radical polymerizable monomer (b) (hereinbelow, this may be referred as a component (b)) is not particularly limited, and known compounds can be used. Particularly from the point of good photochromic property and hardness, below monomers may be preferably used. Specifically, the radical polymerizable monomer (b) may preferably be constituted by a monomer (b1) shown by below formula (1) (hereinbelow, this may be referred as a component (b1)) and a polymerizable monomer (b2) which is other than the component (b1) (hereinbelow, this may be referred as a component (b2)).

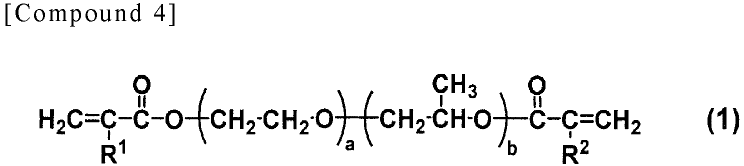

(In the above formula (1), R¹ and R² each may be a hydrogen atom or a methyl group; a and b may be integers of 0 or larger, and a + b may be an integer of 2 or larger. Also, in many cases, the component (b1) is obtained as a mixture product due to its production. Thus, a + b may be 2 or larger on average, and more preferably a + b may be an integer between 2 or larger and 50 or smaller on average.

Hereinbelow, various compounds used as the component (b1) and the component (b2) are described in detail.

### (Component (b1); Monomer shown by the above formula (1))

Followings are specific examples of the compounds shown by the above formula (1).

Diethylene glycol dimethacrylate, triethylene glycol dimethacrylate, tetraethylene glycol dimethacrylate, pentaethylene glycol dimethacrylate, pentapropylene glycol dimethacrylate, diethylene glycol diacrylate, triethylene glycol diacrylate, tetraethylene glycol diacrylate, pentaethylene glycol diacrylate, tripropylene glycol diacrylate, tetrapropylene glycol diacrylate, pentapropylene glycol diacrylate, dimethacrylate made of a mixture of polypropylene glycol and polyethylene glycol (includes a repeating unit having two polyethylenes and two polypropylenes), polyethylene glycol dimethacrylate (particularly, a = 4, b = 0, and an average molecular weight of 330), polyethylene glycol dimethacrylate (particularly, a = 9, b = 0, and an average molecular weight of 536), polyethylene glycol dimethacrylate (particularly, a = 14, b = 0, and an average molecular weight of 736), tripropylene glycol dimethacrylate, tetrapropylene glycol dimethacrylate, polypropylene glycol dimethacrylate (particularly, a = 0, b = 7, and an average molecular weight of 536), polyethylene glycol diacrylate (particularly, an average molecular weight of 258), polyethylene glycol diacrylate (particularly, a = 4, b = 0, and an average molecular weight of 308), polyethylene glycol diacrylate (particularly, a = 9, b = 0, and an average molecular weight of 508), polyethylene glycol diacrylate (particularly, a = 14, b = 0, and an average molecular weight of 708), and polyethylene glycol methacrylate (particularly, a = 9, b = 0, and an average molecular weight of 522) may be mentioned.

### (Component (b2); Polymerizable Monomer other than Component (b1))

The component (b2) is not particularly limited, as long as it is a polymerizable monomer capable of polymerizing with the component (b1), and known compounds may be used. Among these, preferably polyfunctional (meth)acrylate having two or more (meth)acrylate groups in a molecule may be included. More preferably difunctional (meth)acrylate (b2-1) which includes two (meth)acrylate groups in a molecule (hereinbelow, this component may be referred as a component (b2-1)), and polyfunctional (meth)acrylate (b2-2) which includes three or more (meth)acrylate groups in a molecule (hereinbelow, this component may be referred as a component (b2-2)) may be included. Also, monofunctional (meth)acrylate (b2-3) which includes one (meth)acrylate group in a molecule (hereinbelow, this component many be referred as a component (b2-3)) may also be included.

In below, the component (b2) is described in detail.

### (Difunctional (meth)acrylate (b2-1))

In the present invention, preferably the component (b2) may include difunctional (meth)acrylate (b2-1); and more preferably difunctional (meth)acrylate shown in below may be included. Specifically, difunctional (meth)acrylate shown by below formula (2) and formula (3), difunctional (meth)acrylate containing a urethane bond, and difunctional (meth)acrylate which does not belong to these two categories may be included.

### (Component (b2-1-1); Difunctional (meth)acrylate shown by formula (2))

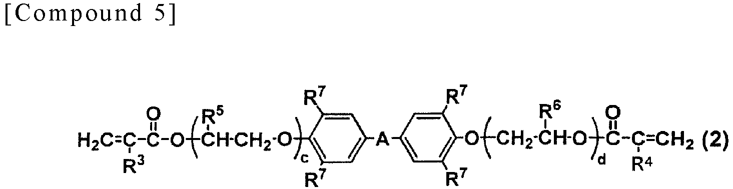

(In the above formula (2),
R³ and R⁴ each may be a hydrogen atom or a methyl group,
R⁵ and R⁶ each may be a hydrogen atom or a methyl group,
R⁷ may be a hydrogen atom or a halogen group,
A may be any one of -O-, -S-, -(SO₂)-, -CO-, -CH₂-, -CH=CH-, -C(CH₃)₂-, and -C(CH₃)(C₆H₅)-,
c and d may respectively be an integer of 1 or larger, and c + d may be 2 or larger and 30 or smaller on average.)

Note that, difunctional (meth)acrylate shown by the above formula (2) is usually obtained as a mixture of molecules having different molecular weights. Thus, c + d is shown by an average value.

As specific examples of difunctional (meth)acrylate shown by the above formula (2), for example following bisphenol-A-di(meth)acrylate may be mentioned.

2,2-bis[4-(methacryloyloxy ethoxy)phenyl] propane (c + d = 2, and an average molecular weight of 452), 2,2-bis[4-(methacryloyloxy diethoxy)phenyl] propane (c + d = 4, and an average molecular weight of 540), 2,2-bis[4-(methacryloyloxy polyethoxy)phenyl] propane (c + d = 7, and an average molecular weight of 672), 2,2-bis [3,5-dibromo-4-(methacryloyloxy ethoxy)phenyl] propane (c + d = 2, and an average molecular weight of 768), 2,2-bis(4-(methacryloyloxy dipropoxy)phenyl) propane (c + d = 4, and an average molecular weight of 596), 2,2-bis[4-(acryloyloxy diethoxy)phenyl] propane (c + d = 4, and an average molecular weight of 512), 2,2-bis[4-(acryloyloxy polyethoxy)phenyl] propane (c + d = 3, and an average molecular weight of 466), 2,2-bis[4-(acryloyloxy polyethoxy)phenyl] propane (c + d = 7, and an average molecular weight of 642), 2,2-bis[4-(methacryloylxy polyethoxy)phenyl]propane (c + d = 10, and an average molecular weight of 804), 2,2-bis[4-(methacryloylxy polyethoxy)phenyl]propane (c + d = 17, and an average molecular weight of 1116), 2,2-bis[4-(methacryloylxy polyethoxy)phenyl]propane (c + d = 30, and an average molecular weight of 1684), 2,2-bis[4-(acryloylxy polyethoxy)phenyl]propane (c + d = 10, and an average molecular weight of 776), and 2,2-bis[4-(acryloylxy polyethoxy)phenyl]propane (c + d = 20, and an average molecular weight of 1216) may be mentioned.

### (Component (b2-1-2); Difunctional (meth)acrylate shown by formula (3))

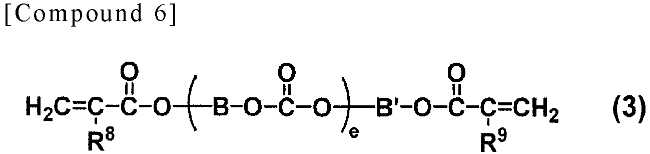

(In the above formula (3),
R⁸ and R⁹ each may be a hydrogen atom or a methyl group,
e may be an integer of 1 to 20 as an average value, and
B and B' may be same or different alkylene group of linear type or a branched type each having 2 to 15 carbon atoms. When a plurality of numbers of B exist, these B may be same group or different groups.)

Difunctional (meth)acrylate shown by the above formula (3) can be produced by reacting polycarbonate diol and (meth)acrylic acid.

Here, as polycarbonate diol used in above, following may be mentioned. Specifically, polycarbonate diol (an average molecular weight of 500 to 2000) obtained by phosgenation of trimethylene glycol; polycarbonate diol (an average molecular weight of 500 to 2000) obtained by phosgenation of tetramethylene glycol; polycarbonate diol (an average molecular weight of 500 to 2000) obtained by phosgenation of pentamethylene glycol; polycarbonate diol (an average molecular weight of 500 to 2000) obtained by phosgenation of hexamethylene glycol; polycarbonate diol (an average molecular weight of 500 to 2000) obtained by phosgenation of octamethylene glycol; polycarbonate diol (an average molecular weight of 500 to 2000) obtained by phosgenation of nonamethylene glycol; polycarbonate diol (an average molecular weight of 500 to 2000) obtained by phosgenation of triethylene glycol and tetramethylene glycol; polycarbonate diol (an average molecular weight of 500 to 2000) obtained by phosgenation of tetramethylene glycol and hexamethylene glycol; polycarbonate diol (an average molecular weight of 500 to 2000) obtained by phosgenation of pentamethylene glycol and hexamethylene glycol; polycarbonate diol (an average molecular weight of 500 to 2000) obtained by phosgenation of tetramethylene glycol and octamethylene glycol; polycarbonate diol (an average molecular weight of 500 to 2000) obtained by phosgenation of hexamethylene glycol and octamethylene glycol; and polycarbonate diol (an average molecular weight of 500 to 2000) obtained by phosgenation of 1-methyltrimethylene glycol may be mentioned.

### (Component (b2-1-3); Difunctional (meth)acrylate containing a urethane bond)

Difunctional (meth)acrylate containing a urethane bond is obtained by reacting the above-described polyisocyanate compound (A1) having two or more isocyanate groups in a molecule, the above-described polyol compound (A2) having two or more hydroxyl groups in a molecule, and hydroxyl group containing (meth)acrylate. Here, as polyisocyanate, for example, hexamethylene diisocyanate, isophorone diisocyanate, lysine isocyanate, 2,2,4-hexamethylene diisocyanate, diisocyanate dimerate, isopropylidene bis-4-cyclohexylisocyanate, dicyclohexylmethane diisocyanate, norbornene diisocyanate, methylcyclohexanediisocyanate, and the like may be mentioned.

On the other hand, as polyol, polyester diol such as polyalkylene glycol, polycaprolactone diol, and the like which include a repeating unit of ethylene oxide, propylene oxide, and hexamethylene oxide which include 2 to 6 carbon atoms. Also, polycarbonate diol, polybutadiene diol, pentaerythritol, ethylene glycol, propylene glycol, 1,3-propanediol, 1,4-butanediol, 1,5-pentanediol, 1,6-hexanediol, 1,9-nonanediol, 1,8-nonandiol, neopentyl glycol, diethylene glycol, dipropylene glycol, 1,4-cyclohexanediol, 1,4-cyclohexanedimethanol, glycerin, trimethylol propane, and the like may be mentioned.

Also, urethane (meth)acrylate monomer and the like which are a reaction mixture prepared by further reacting 2-hydroxy(meth)acrylate with urethane prepolymer made by reacting the above polyisocynate and polyol; or a reaction mixture prepared by directly reacting the above-mentioned diisocyanate and 2-hydroxy(meth)acrylate may be used.

For example, as hydroxyl group containing (meth)acrylate, 2-hydroxyethyl (meth)acrylate, 2-hydroxypropyl (meth)acrylate, 3-hydroxypropyl (meth)acrylate, 3-hydroxybutyl (meth)acrylate, 4-hydroxybutyl (meth)acrylate, and the like may be mentioned.

As difunctional (meth)acrylate polymerizable compound containing a urethane bond, commercially available products may be used without any particular limitation. For example, as such commercially available products, U-2PPA (molecular weight 482), UA-122P (molecular weight 1100), and U-122P (molecular weight 1100) which are made by SHIN-NAKAMURA CHEMICAL CO, LTD; and EB4858 (molecular weight 454) made by DAICEL-ALLNEX LTD, and the like may be mentioned.

### (Component (b2-1-4); Difunctional (meth)acrylate other than mentioned in above)

As difunctional (meth)acrylate (b2-1-4) other than mentioned in above, a compound including (meth)acrylate groups to both terminal ends of an alkylene group where substituent groups may be positioned may be mentioned. As such compound, a compound including an alkylene group having 6 to 20 carbon atoms may be preferable. Specifically, 1,6-hexanediol diacrylate, 1,6-hexanediol dimethacrylate, 1,9-nonanediol diacrylate, 1,9-nonanediol dimethacrylate, 1,10-decanediol diacrylate, 1,10-decanediol dimethacrylate, and the like may be mentioned.

As difunctional (meth)acrylate other than mentioned in above, difunctional (meth)acrylate which includes a sulfur atom may be mentioned as well. Preferably, the sulfur atom may be part of a molecular chain as a sulfide group. Specifically, bis(2-methacryloyloxyethyl thioethyl)sulfide, bis(methacryloyloxyethyl) sulfide, bis(acryloyloxyethyl) sulfide, 1,2-bis(methacryloyloxyethylthio) ethane, 1,2-bis(acryloyloxyethyl) ethane, bis(2-methacryloyloxyethyl thioethyl) sulfide, bis(2-acryloyloxyethyl thioethyl) sulfide, 1,2-bis(methacryloyloxyethylthio ethylthio) ethane, 1,2-bis(acryloyloxyethylthio ethylthio) ethane, 1,2-bis(methacryloyloxyisopropylthio isopropyl) sulfide, 1,2-bis(acryloyloxyisopropylthio isopropyl) sulfide, and the like may be mentioned.

Regarding the above-mentioned component (b2-1), each component individually explained in above may be used alone, or a plurality of components may be used together. Also, each component individually explained may be combined and a plurality of combinations may be used. When the plurality of components or the plurality of combinations are used, a total amount of a plurality of types used is considered as a mass of the component (b2-1).

### (Component (b2-2); Polyfunctional (meth)acrylate)

As the component (b2-2), polyfunctional (meth)acrylate shown by the below formula (4), polyfunctional (meth)acrylate including a urethane bond, polyrotaxane including a (meth)acrylate group, and polyfunctional (meth)acrylate other than these may be mentioned.

### (Component (b2-2-1); Polyfunctional (meth)acrylate shown by the below formula (4))

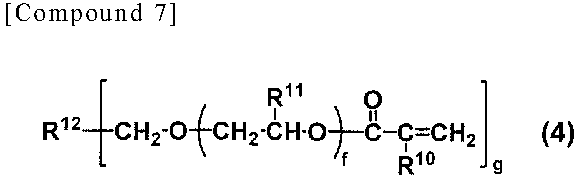

(In the above formula (4),
R¹⁰ may be a hydrogen atom or a methyl group,
R¹¹ may be a hydrogen atom or an alkyl group of 1 to 2 carbon atoms,
R¹² may be a trivalent to hexavalent organic group having 1 to 10 carbon atoms,
f may be an integer of 0 to 3 on average, and g may be an integer of 3 to 6).

The alkyl group of 1 to 2 carbon atoms represented by R¹¹ may preferably be a methyl group.

As the organic group represented by R¹², a group which is derived from polyol, a trivalent to hexavalent hydrocarbon group, an organic group which includes a trivalent to hexavalent urethane bond may be mentioned.

Specific examples of polyfunctional (meth)acrylate shown by the formula (4) may include the followings. Trimethylolpropane trimethacrylate, trimethylolpropane triacrylate, tetramethylolmethane trimethacrylate, tetramethylolmethane triacrylate, tetramethylolmethane tetramethacrylate, tetramethylolmethane tetraacrylate, trimethylolpropanetriethyleneglycol trimethacrylate, trimethylolpropanetriethyleneglycol triacrylate, ditrimethylolpropane tetramethacrylate, and ditrimethylolpropane tetraacrylate may be mentioned.

### (Component (b2-2-2); Polyfunctional (meth)acrylate containing a urethane bond)

Polyfunctional (meth)acrylate containing a urethane bond (b2-2-2) is obtained by reacting the polyisocyanate compound (A1) which includes two or more isocyanate groups in a molecule, the polyol compound which includes two or more hydroxyl groups in a molecule, and hydroxyl group containing (meth)acrylate; and preferably it is polyfunctional (meth)acrylate containing a urethane bond which includes three or more (meth)acrylate groups in a molecule. As a commercially available products, U-4HA (a molecular weight of 596, number of functional groups of 4), U-6HA (a molecular weight of 1019, a number of functional groups of 6), U-6LPA (a molecular weight of 818, a number of functional groups of 6), and U-15HA (a molecular weight of 2300, a number of functional groups of 15) which are made by SHIN-NAKAMURA CHEMICAL CO., LTD may be mentioned.

### (Component (b2-2-3); Polyrotaxane including a (meth)acrylate group)

Polyrotaxane (b2-2-3) including a (meth)acrylate group is a complex molecule made of an axis molecule and a plurality of ring form molecules clathrating the axis molecule. Regarding polyrotaxane having the ring form molecule to which a hydrocarbon group is introduced, 1 mol% or more and less than 100 mol% of the hydroxyl group of the side chain are modified by a compound including a (meth) acrylate group, thereby the polyrotaxane including a (meth)acrylate group may be obtained.

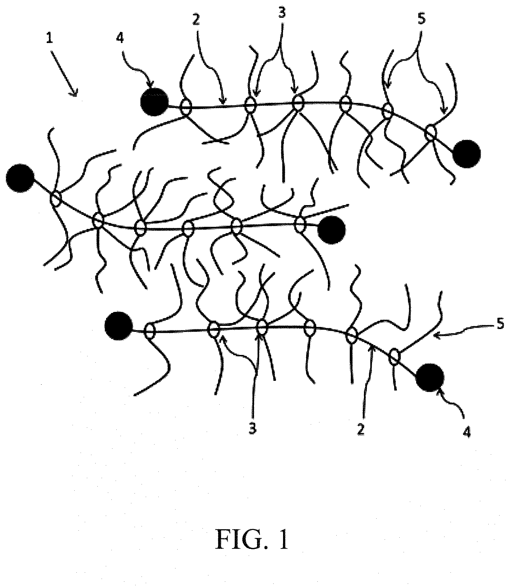

Polyrotaxane is a known compound. FIG.1 shows the overall structure of the polyrotaxane 1, and as shown in FIG.1, polyrotaxane 1 has a complex molecular structure which includes a chain form axis molecule 2 (hereinbelow, it may be referred as an axis molecule) and a ring form molecule 3. That is, a plurality of ring form molecules 3 clathrates the axis molecule 2, and the axis molecule 2 runs through the inside of the rings of the ring form molecules 3. Thus, the ring form molecules 3 can freely slide over the axis molecule 2, but since bulky terminal ends 4 are formed at both ends of the axis molecule 2, the ring form molecules 3 are prevented from slipping out of the axis molecule 2. The ring form molecule 3 preferably includes hydroxyl group so that a side chain 5 can be introduced. Further, for the reaction between at least part of the hydroxyl groups and the compound including a (meth)acrylate group, a known reaction condition can be employed.

By introducing a (meth)acrylate group capable of polymerizing with the above-mentioned polymerizable monomers to the side chain of the ring form molecule, a compatibility can be enhanced, and also it is thought that the photochromic compounds can be uniformly dispersed in the voids created by polyrotaxane. As a result, the obtained photochromic resin layer can maintain an excellent photochromic property, and also increases the mechanical strength.

The compound including a (meth)acylate group is introduced using the above-mentioned side chain, and the compound which reacts with the hydroxyl group (OH) of the side chain can be used. The compound including a (meth)acrylate group is not particularly limited as long as it is a compound including a functional group capable of reacting with the hydroxyl (OH) group and a (meth)acrylate group in a molecule; and considering the compatibility with other components, preferably it is a compound which does not include a hydroxyl (OH) group.

As examples of the functional groups capable of reacting with the hydroxyl (OH) group, an isocyanate (-NCO) group, a carboxyl (-COOH) group, an acid chloride group (such as -COCl group), and the like may be mentioned. By reacting with the compound including an isocyanate group, a (meth)acrylate group is introduced via the urethane bond. Alternatively, by reacting with the compound including a carboxyl group, an acid chloride group, and the like, a (meth)acrylate group is introduced via an ester bond.

Specific examples of such compound including a (met)acrylate group includes a compound including an isocyanate group and a (meth)acrylate group such as 2-isocyanatoethyl methacrylate, 2-isocyanatoethyl acrylate, 1,1-(bisacryloyloxymethyl)ethyl isocyanate, and the like may be mentioned.

Also, a compound including an acid chloride group (-COCl group) and a (meth)acrylate group can be made by reacting a chlorinating agent such as thionyl chloride and a compound including a carboxyl group and a (meth)acrylate group.

As a compound including a carboxyl group and a (meth)acrylate group, 2-methacryloyloxyethyl succinate, β-carboxyethyl acrylate, and the like may be mentioned.

Regarding polyrotaxane including a (meth)acrylate group used in the present invention, preferably a modified ratio of the (meth)acrylate group to the hydroxyl (OH) group of the side chain may be 1 mol% or more and less than 100 mol%; that is a reaction ratio of the compound including a (meth)acrylate group to a mol numbers of the entire hydroxyl groups may preferably be 1 mol% or more and less than 100 mol%. The modified ratio is calculated as (number of moles to which the polymerizable group is introduced)/(number of moles of entire OH group of the side chain) x 100. Note that, the modified ratio may preferably be within a range of 10 mol% or more and 95 mol% or less from the point of the adhesion property, the mechanical strength of the obtained cured body, and the photochromic properties.

Such polyrotaxane including a (meth)acrylate group mentioned in above is disclosed in WO 2018/030257.

### (Component (b2-2-4); Polyfunctional (meth)acrylate other than mentioned in above)

As polyfunctional (meth)acrylate (b2-2-4) other than mentioned in above, a compound of which a terminal end of a polyester compound is modified by a (meth)acrylate group may be mentioned. Depending on the molecular weight of a polyester compound as a raw material and on the modified amount of (meth)acrylates, various kinds of polyester (meth)acrylate compounds are commercially available, and these may be used. Specifically, tetrafunctional polyester oligomer (EB80 and the like, a molecular weight of 2500 to 3500, made by DAICEL-ALLNEX LTD), hexafunctional polyester oligomer (EB450 and the like, a molecular weight of 6000 to 8000, made by DAICEL-ALLNEX LTD), hexafunctional polyester oligomer (EB1830 and the like, a molecular weight of 45000 to 55000, made by DAICEL-ALLNEX LTD), tetrafunctional polyester oligomer (GX8488B and the like, particularly a molecular weight of 10000, made by DKS Co. Ltd), and the like may be mentioned.

By using the component (b2-2) of which the examples are shown in above, while maintaining the photochromic properties, if needed, a crosslinking density can be improved by polymerization. Therefore, particularly when forming the photochromic layer using a coating method, the component (b2-2) may be preferably included. Among the components of the component (b2-2), the component (b2-2-1) and the component (b2-2-3) may be used more preferably.

Regarding the above-mentioned component (b2-2), each component individually explained in above may be used alone, or a plurality of components may be used together. Also, each component individually explained may be combined and a plurality of combinations may be used. When the plurality of components or the plurality of combinations are used, a total amount of a plurality of types used is considered as a mass of the component (b2-2).

### (Component (b2-3); Monofunctional (meth)acrylate)

As monofunctional (meth)acrylate (b2-3), the below described monofunctional (meth)acrylate shown by a formula (5) may be mentioned.

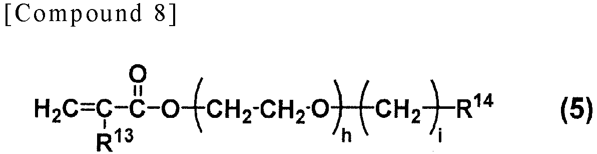

(In the above formula (5),
R¹³ may be a hydrogen atom or a methyl group,
R¹⁴ may be a hydrogen atom, a methyldimethoxysilyl group, a trimethoxysilyl group, or a glycidyl group,
h is an integer of 0 to 10, and
i is an integer of 0 to 20.)

Specific examples of monofunctional (meth)acrylate shown by the above formula (5) are as described in below. Methoxypolyethylene glycol methacrylate (particularly of an average molecular weight of 293), methoxypolyethylene glycol methacrylate (particularly of an average molecular weight of 468), methoxypolyethylene glycol acrylate (particularly of an average molecular weight of 218), methoxypolyethylene glycol acrylate (particularly of average molecular weight of 454), stearyl methacrylate, lauryl methacrylate, methyl acrylate, ethyl acrylate, butyl acrylate, octyl acrylate, lauryl acrylate, γ-methacryloyloxypropyltrimethoxysilane, γ-methacryloyloxypropylmethyldimethoxysilane, glycidyl methacrylate, and the like may be mentioned.

### (Blending ratio of each component in photochromic (meth)acrylate Curable Composition)

Regarding the blending ratio of the above-mentioned component (b1) and component (b2), the component (b1) may preferably be within a range of 30 to 95 parts by mass, and the component (b2) may preferably be within a range of 5 to 75 parts by mass considering a color optical density and a fading speed of the obtained photochromic layer.

Also, as the component (b2), preferably the component (b2-2) may be used, and depending on the needs, the component (b2-1) and the component (b2-3) may preferably be included. When the total amount of the component (b2) is 100 parts per mass, preferably the component (b2-1) may be within a range of 0 to 50 parts by mass, the component (b2-2) may be within a range of 50 to 100 parts by mass, and the component (b2-3) may be within a range of 0 to 30 parts by mass.

### (Polymerization Initiator)

As a polymerization initiator, a thermal polymerization initiator and a photo polymerization initiator may be mentioned. Specific examples of theses are as described in below.

As thermal polymerization initiators,
diacyl peroxides such as benzoyl peroxide, p-chlorobenzoyl peroxide, decanoyle peroxide, lauroyl peroxide, and acetyl peroxide;
peroxyesters such as t-butylperoxy-2-ethylhexanate, t-butylperoxyneodecanate, cumylperoxyneodecanate, and t-butylperoxybenzoate;
percarbonates such as diisopropyl peroxydicarbonate and di-sec-butylperoxydicarbonate;
azo compounds such as azobisisobutyronitrile; and the like may be mentioned.

As photo polymerization initiators,
acetophenone based compounds such as 1-phenyl-2-hydroxy-2-methylpropane-1-one, 1-hydroxycyclohexylphenylketone, and 1-(4-isopropylphenyl)-2-hydroxy-2-methylpropane-1-one;
α-dicarbonyl based compounds such as 1,2-diphenylethanedione and methylphenylglycoxylate;
acylphosphine oxide-based compounds such as 2,6-dimethylbenzoyldiphenylphosphine oxide, 2,4,6-trimethylbenzoyldiphenylphosphine oxide, 2,4,6-trimethylbenzoyldiphenylphosphinic acid methyl ester, 2,6-dichlorobenzoyldiphenylphosphine oxide, 2,6-dimethoxybenzoyldiphenylphosphine oxide; and the like may be mentioned.

Note that, when a photo polymerization initiator is used, a known polymerization curing accelerator such as tertiary amine and so on may be used together.

Such photo polymerization initiator is usually used within a range of 0.001 to 5 parts by mass with respect to 100 parts by mass of the radical polymerizable monomer (b). As the above-mentioned photo polymerization initiator, it may be used alone or two or more types may be combined and used.

### [Other additive components in photochromic (meth)acrylate curable composition]

In addition to the above-mentioned components, within the range which does not compromise the effects of the present invention, the photochromic (meth)acrylate curable composition may include, depending on needs, various known agents, for example, various stabilizers such as ultraviolet ray absorbing agents, infrared ray absorbing agents, UV stabilizers, antioxidants, anti-coloring agents, antistatics, fluorescent dyes, dyes, pigments, fragrances, and so on; also additive agents, solvents, leveling agents and so on.

Among these, it is preferable to use the UV stabilizers, since the durability of the photochromic compound can be improved. As such UV stabilizers, a hindered amine photo stabilizer, a hindered phenol antioxidant, an iodine-based antioxidant, and the like are known. The particularly preferably UV stabilizers are as listed in below.

Bis(1,2,2,6,6-pentamethyl-4-piperidyl) sebacate; ADK STAB LA-52, LA-57, LA-62, LA-63, LA-67, LA-77, LA-82, and LA-87 made by ADEKA CORPORATION; 2,6-di-t-butyl-4-methyl-phenol; ethylene bis(oxyethylene)bis[3-(5-t-butyl-4-hydroxy-m-tolyl) propionate]; IRGANOX 1010, 1035, 1075, 1098, 1135, 1141, 1222, 1330, 1425, 1520, 259, 3114, 3790, 5057, 565, and 254 made by Ciba Specialty Chemicals; and the like may be mentioned.

The used amount of such ultraviolet ray stabilizers is not particularly limited, as long as the effects of the present invention are not compromised. Usually, it may be within a range of 0.001 to 10 parts by mass, and particularly preferably within a range of 0.01 to 3 parts by mass with respect to 100 parts by mass of the polymerizable monomer. When a hindered amine photostabilizer is used, the used amount may preferably be within a range of 0.5 to 30 mol, more preferably within a range of 1 to 20 mol, and even more preferably within a range of 2 to 15 mol per 1 mol of the photochromic compound so that the adjusted color tone does not vary due to the difference in an improvement effect of the durability depending on the types of the photochromic compound.

In the present invention, by mixing/blending the components described in above as examples, the photochromic (meth)acrylate curable composition is preferably adjusted to have a viscosity within a range of 20 to 5000 mPa·s, preferably within a range of 70 to 1000 mPa·s, more preferably within a range of 100 to 500 mPa·s, and particularly preferably within a range of 120 to 300 mPa·s.

In the present invention, the photochromic (meth)acrylate curable composition may preferably be formed as a coating film using a spin coat method on the optical substrate having the primer layer. Also, a method of placing the optical substrate having the primer layer in a mold, and introducing the photochromic curable composition in the mold may be preferably used.

### EXAMPLES

Next, the present invention is described in detail using examples and comparative examples, however the present invention is not limited thereto. List of components used in examples and comparative examples, photochromic properties, and evaluation methods are as described in below.

### <Primer composition for optical article>

### Components for producing a urethane prepolymer (A)

### Component (A1)

TDI: a mixture of tolylene-2,4-diisocyanate (80 mass%) and tolylene-2,6-diisocyanate (20 mass%)
IPDI: isophorone diisocyanate

### Component (A2)

PL1: DURANOL made by Asahi Kasei Chemicals Co., Ltd. (polycarbonate diol using 1,5-pentane diol and hexane diol as raw materials, and a number average molecular weight of 500)
PL2: DURANOL made by Asahi Kasei Chemicals Co., Ltd. (polycarbonate diol using 1,5-pentane diol and hexane diol as raw materials, and a number average molecular weight of 1000)
PL3: ETERNACOLL made by UBE Corporation (polycaprolactone polyol, a number average molecular weight of 1000)
PL4: polyester polyol using adipic acid and 3-methyl-1,5-pentane diol as raw materials (a number average molecular weight of 500)
PL5: polyester polyol using isophthalic acid and 3-methyl-1,5-pentane diol as raw materials (a number average molecular weight of 500)

### Component (A3)

PG1: 1,2-propane diol (a molecular weight of 76)
PG2: 1,3-propane diol (a molecular weight of 76)
TMP: trimethylol propane (a molecular weight of 134)

### (Blocking agent)

BC1: diethyl malonate
BC2: ethyl acetoacetate

### Component (B)

PG1: 1,2-propane diol (a molecular weight of 76)
IPDA: isophorone diamine (a molecular weight of 170)
TMP: trimethylol propane (a molecular weight of 134)

### Component (C)

Toluene
Ethyl acetate
Diethyl ketone

### Component (D)

L7001: Product name; L7001 (a leveling agent) made by Dow Corning Toray Co.,Ltd
FZ2104: Product name; FZ2104 (a leveling agent) made by Dow Corning Toray Co., Ltd

### Component (E)

PC1: a compound shown by below formula

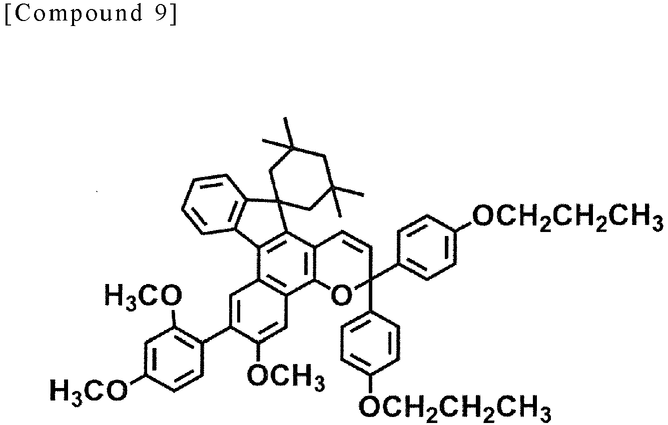

### <Photochromic (meth)acrylate curable composition>

### [Component (b)]

### Component (b1)

9G; polyethyleneglycol dimethacrylate (an average chain length of ethylene glycol of 9, an average molecular weight of 536)
14G; polyethyleneglycol dimethacrylate (an average chain length of ethylene glycol of 14, an average molecular weight of 736)
A-400; polyethyleneglycol diacrylate (an average chain length of ethylene glycol of 9, an average molecular weight of 508)

### Component (b2)

TMPT: trimethylolpropane trimethacryalate
D-TMP: ditrimethylolpropane tetraacrylate
Sl-1: γ-methacryloyloxypropyltrimethoxysilane
GMA: glycidyl methacrylate
RX-1: polyrotaxane including a (meth)acrylate group which was produced using a production example 1 as described in below. Polyrotaxane satisfying the below characteristics was produced following the method described in WO2018/030257.

As a compound for an axis molecule, linear polyethylene glycol (PEG) having a molecular weight of 20000 was prepared.

As a compound for a ring molecule, α-cyclodextrin (a-CD) was prepared (an introducing ratio of 0.25).

The terminal end of the axis molecule was sealed using adamantane.

Regarding the side chains introduced to the ring molecule, the (average) molecular weight of the side chains was about 600; and polyrotaxane including a (meth)acrylate had a weight average molecular weight Mw (GPC) of 880000, an acrylate group modified ratio was 85 mol%, and a ratio of OH group remaining on the side chains was 15 mol%.

### Polymerization initiator

CGI: phenylbis(2,4,6-trimethylbezoyl)-phosphine oxide (Product name: Omnirad819, made by IGM) (polymerization initiator)

### Other additive components

HALS: bis(1,2,2,6,6-pentamethyl-4-piperidyl) sebacate (a molecular weight of 508) (UV stabilizer)
HP: ethylene bis(oxyethylene)bis[3-(5-t-butyl-4-hydroxy-m-tolyl) propionate] (made by Ciba Specialty Chemicals, Irganox 245) (UV stabilizer)
L7001: Product name; L7001 (a leveling agent) made by Dow Corning Toray Co.,Ltd

The above-mentioned components were mixed in amounts shown in Table 1, and the photochromic curable composition was prepared.

**[Table 1]**

| No. | Photochromic (meth)acrylate curable composition | | | | | | |
|---|---|---|---|---|---|---|---|
| | Component (b1) (parts by mass) | Component (b2-2-1) (parts by mass) | Component (b2-2-3) (parts by mass) | Component (b2-3) (parts by mass) | Component (C) (parts by mass) | Component (E) (parts by mass) | Other components (parts by mass) |
| Example 1 | 14G(40) A-400(21) | TMPT(30) | RX-1(3) | SI-1(3) GMA(1) | CGI(0.3) | PC1(2) | HALS(3) HP(1) |
| Example 2 | 14G(40) A-400(21) | TMPT(30) | RX-1(3) | SI-1(3) GMA(1) | CGI(0.3) | PC1(2) | HALS(3) HP(1) |
| Example 3 | 14G(50) | TMPT(30) D-TMP(16) | - | SI-1(3) GMA(1) | CGI(0.3) | PC1(2) | HALS(3) HP(1) |
| Example 4 | 14G(40) A-400(21) | TMPT(30) | RX-1(3) | SI-1(3) GMA(1) | CGI(0.3) | PC1(2) | HALS(3) HP(1) |
| Comparative example 1 | 14G(40) A-400(21) | TMPT(30) | RX-1(3) | SI-1(3) GMA(1) | CGI(0.3) | PC1(2) | HALS(3) HP(1) |
| Example 6 | 14G(40) A-400(21) | TMPT(30) | RX-1(3) | SI-1(3) GMA(1) | CGI(0.3) | PC1(2) | HALS(3) HP(1) |
| Example 7 | 14G(40) A-400(21) | TMPT(30) | RX-1(3) | SI-1(3) GMA(1) | CGI(0.3) | PC1(2) | HALS(3) HP(1) |
| Example 8 | 14G(40) A-400(21) | TMPT(30) | RX-1(3) | SI-1(3) GMA(1) | CGI(0.3) | PC1(2) | HALS(3) HP(1) |
| Example 9 | 14G(40) A-400(21) | TMPT(30) | RX-1(3) | SI-1(3) GMA(1) | CGI(0.3) | PC1(2) | HALS(3) HP(1) |
| Example 10 | 14G(40) A-400(21) | TMPT(30) | RX-1(3) | SI-1(3) GMA(1) | CGI(0.3) | PC1(2) | HALS(3) HP(1) |
| Example 11 | 14G(40) A-400(21) | TMPT(30) | RX-1(3) | SI-1(3) GMA(1) | CGI(0.3) | PC1(2) | HALS(3) HP(1) |
| Example 12 | 14G(40) A-400(21) | TMPT(30) | RX-1(3) | SI-1(3) GMA(1) | CGI(0.3) | PC1(2) | HALS(3) HP(1) |
| Comparative example 2 | 14G(40) A-400(21) | TMPT(30) | RX-1(3) | SI-1(3) GMA(1) | CGI(0.3) | PC1(2) | HALS(3) HP(1) |
| Comparative example 3 | 14G(40) A-400(21) | TMPT(30) | RX-1(3) | SI-1(3) GMA(1) | CGI(0.3) | PC1(2) | HALS(3) HP(1) |

### Example 1

### (Production of primer composition for optical article)

To a reaction container with a stirrer, 142 g of PL1 as the component (A2), 90 g of TDI as the component (A1), and 58 g of toluene were added and mixed uniformly. An urethanization reaction was performed by adjusting the temperature of this mixture to 90°C (production of the first precursor). Note that, blending ratios of components, a total number of moles of the isocyanate groups in the component (A1) which is represented by nA1, and a total number of moles of the hydroxyl group in the component (A2) which is represented by nA2 are shown in Table 2.

Further, to the solution including the first precursor obtained through the above-mentioned method, 3.9 g of PG as the component (A3) and 177 g of toluene were added, and the temperature was adjusted to 75°C to carry out a chain extension reaction, thereby a precursor of the urethane prepolymer including the isocyanate groups was prepared (production of the second precursor). Note that, Table 2 shows a total number of moles of the active hydrogen functional group in the component (A3) which is represented by nA3.

To a solution including this second precursor, 32 g of BC1 as the blocking agent was added and reaction was proceeded at 65°C to block the isocyanate groups (production of a second urethane prepolymer).

To a solution including this second urethane prepolymer, 3.9 g of PG as the component (B), 1.0 g of L7001 as the component (D), and 485 g of ethyl acetate as the component (C) were added, then these were thoroughly mixed under nitrogen atmosphere until the mixture was uniform, thereby the primer composition for an optical article was obtained. Note that, Table 2 shows a total number of moles of the active hydrogen functional groups in the component (B) when a total number of moles of the isocyanate groups blocked using the blocking agent in the component (A) is 1 mol.

Toluene which was used during the production of the first precursor and the second precursor may be considered as the component (C) of the primer composition for the optical article. As a result, the component (C) was 300 parts by mass with respect to 100 parts by mass of the second urethane prepolymer (a total of the component (A)) and the component (B).

### (Measuring number average molecular weight of urethane prepolymer)

A weight average molecular weight of the component (A) (the second urethane prepolymer) obtained using the above-mentioned method was measured using Gel Permeation Chromatography (GPC measurement) under the below conditions. For GPC measurement, a liquid chromatography system (made by WATERS) was used. For columns, Shodex GPC KD-806M made by SHOWA DENKO K.K. (size exclusion limit molecular weight: 200,000,000) was used. For a developing solution, dimethylformamide (DMF) was used, and measurement was carried out at a flow rate of 1 ml/min and the temperature of 40°C. As a standard sample, polyethylene glycol was used; and the number average molecular weight was obtained by a comparison conversion. Note that, as a detecting apparatus, a differential refractometer was used. The number average molecular weight of the component (A) obtained using this method was 2000.

### (Method of forming primer layer)

First, as an optical substrate, a thiourethane based plastic lens (MRA) having a center thickness of 2.0 mm and a refractive index of 1.60 was prepared. Note that, this thiourethane based plastic lens was alkaline etched in advance using 10% sodium hydroxide solution for 5 minutes at 50°C, and distilled water was used to wash thoroughly.

In addition to the above, using the below described plastic optical substrates (lens substrates), multilayer bodies each having a photochromic layer was produced.
CR: allyl-based resin plastic lens, a refractive index = 1.50
TRB: urethane-based resin plastic lens, a refractive index = 1.53
MRB: thiourethane based resin plastic lens, a refractive index = 1.67
TEA: thioepoxy based resin plastic lens, a refractive index = 1.71
TEB: thioepoxy based resin plastic lens, a refractive index = 1.74
PC: polycarbonate lens with photocurable hard coat layer, a refractive index = 1.58

Note that, the above-mentioned CR, TRB, MRB, TEA, TEB, and PC all had a center thickness of 2 mm, and were alkaline etched using the same method as in case of MRA, then distilled water was used to wash thoroughly.

Then, to the surface of the optical substrate, the primer composition for the optical article produced using the above-mentioned method was dip coated, then it was dried for 15 minutes at 60°C, thereby the primer layer was formed. Here, the thickness of the primer layer was 5 µm (production of the multilayer body having the primer layer).

### (Method of Forming Photochromic Layer)

Then, on the primer layer of the multilayer body obtained using the above-mentioned method, 2g of the composition obtained by mixing the components of the photochromic (meth)acrylate curable composition shown in Table 1 was spin coated by spinning for 30 seconds at a rotational speed of 100 rpm followed by spinning for 10 to 20 seconds at a rotational speed of 800 rpm so that the thickness of the photochromic (meth)acrylate curable composition on the primer layer was 40 µm. Then, to the lens which was surface coated with the photochromic (meth)acrylate curable composition, a metal halide lamp of output power of 200 mW/cm² was used to irradiate light for 80 seconds under nitrogen gas atmosphere, thereby the composition was polymerized. Then, heating was carried out for 3 hours at 110°C to form the photochromic layer having a thickness of 40 µm on the optical substrate.

The obtained multilayer body having the photochromic layer was evaluated as described in below. The results are shown in Table 4.

### <Evaluation Method>

### (Photochromic Properties)

The obtained photochromic optical article was used as a sample, and exposed to light from a xenon lamp L-2480 (300 W) SHL-100 made by Hamamatsu Photonics K.K. through an aeromass filter (made by CORNING) at 20±1°C for 120 seconds with a beam intensity of 365 nm = 2.4 mW/cm² and 245 nm = 24 µm/cm² on the surface of the photochromic optical article to develop color in order to measure the photochromic properties.

Maximum Absorption Wavelength (λmax):
Maximum absorption wavelength after color development obtained by the spectrophotometer (instantaneous multi-channel photodetector MCPD1000) made by Otsuka Electronics Co., Ltd. The maximum absorption wavelength is related to color at the time of color development.

Color Optical Density {ε(120) - ε(0)}:
Difference between absorbance {ε(120)} after 120 seconds of exposure to light at the above maximum absorption wavelength and absorbance ε(0) before exposure. It can be said that the higher this value was, the better the photochromic properties were.

Fading Speed [t1/2 (sec.)]:
Time elapsed until the absorbance at the above maximum absorption wavelength of the sample drops to 1/2 of {ε(120)-ε(0)} when exposure was continued for 120 seconds and then stopped. It can be said that the shorter this time was, the better the photochromic properties were.

### (Appearance)

The multilayer bodies having seven types of plastic optical substrates (lens substrates) were evaluated using an optical microscope. Standards of evaluations are as described in below.

Evaluation on Appearance (cracks, white coloring, spiral shape deform)
A: uniform appearance, no appearance defects observed
B: very minor appearance defects observed
C: appearance defects partly observed
D: appearance defects observed overall

### (Adhesion Property)

The adhesion property was evaluated using the multilayer bodies having the above-mentioned 7 types of plastic optical substrates (lens substrates), and by using a cross-cut test method according to JISD-0202. That is, using a retractable knife, the surface of the obtained photochromic optical article was cut in 1 mm interval to form a lattice pattern having 100 squares. Then, CELLOTAPE^{™} (made by NICHIBAN Co.,Ltd.) was firmly adhered thereto, and tensile peeling was done by pulling at 90° direction to the surface, then a number of squares of the lattice pattern where the photochromic optical article was left on was counted.

### (Storage Stability)

The primer composition for the optical article produced using the above-mentioned method was stored for 1 week at 25°C to verify the coating property. It was evaluated based on the below standards.
A: uniform appearance, no appearance defects observed
B: very minor appearance defects observed
C: appearance defects partly observed

### <Example 2>

To a reaction container with a stirrer, 224 g of PL2 as the component (A2), 90 g of TDI as the component (A1), and 78 g of toluene were added and mixed uniformly. An urethanization reaction was performed by adjusting the temperature of this mixture to 90°C (production of the first precursor).

To this first precursor, 24 g of BC2 as the blocking agent and 232 g of toluene were added and the reaction was carried out at 65°C, thereby the isocyanate groups were blocked (production of the first urethane prepolymer).

To the solution including the obtained first urethane prepolymer, 6.9 g of IPDA as the component (B), 1.6 g of L7001 as the component (D), and 970 g of ethyl acetate as the component (C) were added, and the mixture was stirred under nitrogen atmosphere until it was uniform, thereby the primer composition for the optical article was obtained.

Toluene used for the production of the first precursor can be considered as the component (C) of the primer composition for the optical article. As a result, the component (C) was 400 parts by mass with respect to 100 parts by mass of the first urethane prepolymer (total of the component (A) and the component (B)). The number average molecular weight of the component (A) was 3000.

Note that, the blending ratio of each component, the total number of moles of the isocyanate groups in the component (A1) which is represented by nA1, the total number moles of the hydroxyl groups in the component (A2) which is represented by nA2, and the total number of mols of the active hydrogen functional groups in the component (B) when the total number of mols of the isocyanate groups blocked using the blocking agent in the component (A) is 1 mol are shown in Table 2.

### (Method of forming primer layer)

The primer layer was formed using the same method as Example 1 using the obtained primer composition for the optical article.

### (Method of Forming Photochromic Layer)

Using the multilayer body having the primer layer obtained using the above method, and the photochromic layer was formed on said primer layer using the method described in Example 1 except that the photochromic (meth)acrylate composition shown in Example 2 of Table 1 was used.

### <Evaluation>

The same evaluation method of Example 1 was used to evaluate the obtained multilayer body having the photochromic layer. The results are shown in Table 4.

### <Example 3>

To the reaction container with a stirrer, 284 g of PL3 as the component (A2), 90 g of TDI as the component (A1), 95 g of diethyl ketone were added, and these were mixed uniformly. An urethanization reaction was performed by adjusting the temperature of this mixture to 90°C (production of the first precursor).

Further, to the solution including the first precursor obtained using the above method, 7.8 g of PG1 as the component (A3) and 285 g of toluene were added, and the temperature was adjusted to 75°C to carry out a chain extending reaction. Thereby, the precursor of the urethane prepolymer including isocyanate groups was prepared (production of the second precursor).

To the solution including this second precursor, 24 g of BC2 as the blocking agent was added and the reaction was carried out at 65°C to block the isocyanate groups (production of the second urethane prepolymer).

To the solution including the obtained second urethane prepolymer, 6.9 g of TMP as the component (B), 2.6 g of L7001 as the component (D), and 1800 g of ethyl acetate as the component (C) were added, and stirred under nitrogen atmosphere until the mixture was uniform, thereby the primer composition for the optical article was obtained.

Diethyl ketone and toluene used during the production of the first precursor and the second precursor can be considered as the component (C) of the primer composition for the optical article. As a result, the component (C) was 666 parts by mass with respect to 100 parts by mass of the second urethane prepolymer (total of the component (A) and the component (B)). The number average molecular weight of the component (A) was 3200.

Note that, the blending ratio of each component, the total number of moles of the isocyanate groups in the component (A1) which is represented by nA1, the total number moles of the hydroxyl groups in the component (A2) which is represented by nA2, and the total number of moles of the active hydrogen functional groups in the component (B) when the total number of mols of the isocyanate groups blocked using the blocking agent in the component (A) is 1 mol are shown in Table 2.

### (Method of forming primer layer)

The primer layer was formed using the same method as Example 1 using the obtained primer composition for the optical article.

### (Method of forming photochromic layer)

Using multilayer body having the primer layer obtained using the above method, the photochromic layer was formed on said primer layer using the method described in Example 1 except that the photochromic (meth)acrylate composition shown in Example 3 of Table 1 was used.

### <Evaluation>

The same evaluation method of Example 1 was used to evaluate the obtained multilayer body having the photochromic layer. The results are shown in Table 4.

### <Example 4>

The same procedure as Example 1 was carried out except that the primer composition for the optical article obtained in Example 1 was coated using a spin coat method. The thickness of the primer layer was the same as that of Example 1. Further, the photochromic layer was formed using the same method as described in Example 1, and the same evaluation as Example 1 was carried out. Results are shown in Table 3.

### <Example 5>

The primer composition for the optical article was obtained by the same method as Example 1 except that PL3 was used instead of PL1 as the component (A2). Further, the same procedure as Example 1 was carried out except that 12.0 g of PC1 as the component (E) was added. Further, the photochromic layer was formed using the same method as Example 1 (photochromic (meth)acrylate curable composition shown in Table 1 was used), and the same evaluation as Example 1 was carried out. Results are shown in Table 4.

### <Comparative example 1>

The same procedure as Example 1 was carried out so that the primer composition for the optical article had the same blending as Example 1 except that BC1 as the blocking agent was not used. That is, the primer composition for the optical article including the precursor of the second urethane prepolymer of Example 1 as the main component was produced.

Using the primer composition for the optical article obtained in above, the primer layer was formed by the same method as Example 1, then the photochromic layer (photochromic (meth)acrylate curable composition shown in Table 1 was used) was formed on said primer layer. The obtained multilayer body having the photochromic layer was carried out with the same evaluation as Example 1. Results are shown in Table 4.

### <Examples 6 to 12 and Comparative examples 2 to 3>

Using the same method as described in Example 1, the primer composition for the optical article was prepared. The blending composition is shown in Table 3. Note that, for Comparative example 2, PL6: polypropylene glycol (a number average molecular weight of 1000) was used instead of the component (A2).

Using the obtained primer composition for the optical article, the primer layer was formed by the same method as described in Example 1, and then the photochromic layer (photochromic (meth)acrylate curable composition shown in Table 1 was used) was formed on said primer layer. The same evaluation as Example 1 was used to the obtained multilayer body having the photochromic layer. Results are shown in Table 4.

**[Table 2]**

| No. | Urethane prepolymer (A) | | | | | | Component (B) (g) | Component (B) Number of mols^{∗} | Component (C) (g) | Component (D) (g) | Component (E) (g) |
|---|---|---|---|---|---|---|---|---|---|---|---|
| | Component (A1) (g) | Component (A2) (g) | Component (A3) (g) | Blocking agent (g) | nA1: nA2: nA3 molar ratio | Number average molecular wieght Component (A) | | | | | |
| Example 1 | TDI (90) | PL1 (142) | PG1 (3.9) | BC1 (32) | 0.52:0.28:0.05 | 2000 | PG (3.9) | 0.28 | Toluene (235) Ethyl acetate (485) | L7001 (1.0) | - |
| Example 2 | IPDI (90) | PL2 (224) | - | BC2 (24) | 0.41:0.22: - | 3000 | IPDA (6.9) | 0.23 | Toluene (310) Ethyl acetate (970) | L7001 (1.6) | - |
| Example 3 | TDI (90) | PL3 (284) | PG1 (7.8) | BC2 (24) | 0.52:0.28:0.10 | 3200 | TMP (6.9) | 0.39 | Diethyl ketone (95) Toluene (285) Ethyl acetate (1800) | L7001 (2.6) | - |
| Example 4 | TDI (90) | PL1 (142) | PG1 (3.9) | BC1 (32) | 0.52:0.28:0.05 | 2000 | PG (3.9) | 0.28 | Toluene (235) Ethyl acetate (485) | L7001 (1.0) | - |
| Example 5 | TDI (90) | PL3 (142) | PG1 (3.9) | BC1 (32) | 0.52:0.28:0.05 | 2700 | PG (3.9) | 0.28 | Toluene (285) Ethyl acetate (2185) | L7001 (1.0) | PC1 (12.0) |
| Comparative example 1 | TDI (90) | PL1 (142) | PG1 (3.9) | - | 0.52:0.28:0.05 | 2000 | PG (3.9) | 0.28 | Toluene (235) Ethyl acetate (485) | L7001 (1.0) | - |

| | | | | | | | | | | | |
|---|---|---|---|---|---|---|---|---|---|---|---|
| *Number of mols when the total number of mols of the isocynate groups blocked using the blocking agent in the component (A) is 1 mol | | | | | | | | | | | |

**[Table 3]**

| No. | Urethane prepolymer (A) | | | | | | Component (B) (g) | Component (B) Number of mols^{∗} | Component (C) (g) | Component (D) (g) | Component (E) (g) |
|---|---|---|---|---|---|---|---|---|---|---|---|
| | Component (A1) (g) | Component (A2) (g) | Component (A3) (g) | Blocking agent (g) | nA1: nA2: nA3 molar ratio | Number average molecular wieght Component (A) | | | | | |
| Example 6 | TDI (90) | PL4 (140) | PG1 (12.5) | BC1 (32) | 0.50:0.25:0.15 | 2000 | PG (3.9) | 0.28 | Toluene (235) Ethyl acetate (485) | FZ2104 (1.0) | - |
| Example 7 | TDI (90) | PL5 (140) | PG2 (12.5) | BC1 (32) | 0.50:0.25:0.15 | 2000 | PG (3.9) | 0.28 | Toluene (235) Ethyl acetate (485) | FZ2104 (1.0) | - |
| Example 8 | MDI (140) | PL5 (140) | PG1 (12.5) | BC1 (32) | 0.50:0.25:0.15 | 2200 | PG (3.9) | 0.28 | Toluene (235) Ethyl acetate (485) | FZ2104 (1.0) | - |
| Example 9 | TDI (90) | PL5 (140) | TMP (22.0) | BC1 (32) | 0.50:0.25:0.15 | 2200 | PG (3.9) | 0.28 | Toluene (235) Ethyl acetate (485) | FZ2104 (1.0) | - |
| Example 10 | TDI (90) | PL4 (170) | PG1 (21.0) | BC1 (32) | 0.50:0.30:0.25 | 2600 | PG (3.9) | 0.28 | Toluene (235) Ethyl acetate (485) | FZ2104 (1.0) | - |
| Example 11 | TDI (90) | PL4 (142) | PG1 (12.5) | BC1 (32) | 0.50:0.25:0.15 | 2000 | PG (1.4) | 0.10 | Toluene (235) Ethyl acetate (485) | FZ2104 (1.0) | - |
| Example 12 | TDI (90) | PL4 (142) | PG1 (12.5) | BC1 (32) | 0.50:0.25:0.15 | 2000 | PG (13) | 1.00 | Toluene (235) Ethyl acetate (485) | FZ2104 (1.0) | - |
| Comparative example 2 | TDI (90) | PL6 (284) | PG1 (3.9) | BC1 (32) | 0.52:0.28:0.05 | 2800 | PG (3.9) | 0.28 | Toluene (235) Ethyl acetate (485) | FZ2104 (1.0) | - |
| Comparative example 3 | TDI (90) | PL1 (142) | PG1 (3.9) | BC1 (32) | 0.52:0.28:0.05 | 2000 | - | - | Toluene (235) Ethyl acetate (485) | FZ2104 (1.0) | - |

| | | | | | | | | | | | |
|---|---|---|---|---|---|---|---|---|---|---|---|
| *Number of mols when the total number of mols of the isocynate groups blocked using the blocking agent in the component (A) is 1 mol | | | | | | | | | | | |

**[Table 4]**

| No. | Appearance | | | | | | | Adhesion property | | | | | | | Storage property | Max absorbance wavelength (λ max) | Color optical density | Color fading speed (sec) |
|---|---|---|---|---|---|---|---|---|---|---|---|---|---|---|---|---|---|---|
| | CR | TRB | MRA | MRB | TEA | TEB | PC | CR | TRB | MRA | MRB | TEA | TEB | PC | | | | |
| Example 1 | B | C | A | A | A | A | A | 100 | 100 | 100 | 100 | 90 | 85 | 100 | A | 585 | 0.88 | 55 |
| Example 2 | B | C | A | A | A | A | A | 100 | 100 | 100 | 100 | 85 | 80 | 100 | A | 585 | 0.88 | 55 |
| Example 3 | B | C | A | A | A | A | A | 100 | 100 | 100 | 100 | 85 | 80 | 100 | A | 585 | 0.88 | 50 |
| Example 4 | B | C | A | A | A | A | A | 100 | 100 | 100 | 100 | 90 | 85 | 100 | A | 585 | 0.88 | 55 |
| Example 5 | B | C | A | A | A | A | A | 100 | 100 | 100 | 100 | 85 | 80 | 100 | A | 585 | 0.98 | 55 |
| Comparative example 1 | B | C | A | A | A | A | A | 100 | 100 | 100 | 100 | 90 | 90 | 100 | C | 585 | 0.88 | 55 |
| Examole 6 | B | B | A | A | A | A | A | 100 | 100 | 100 | 100 | 100 | 100 | 100 | A | 585 | 0.88 | 55 |
| Example 7 | B | B | A | A | A | A | A | 100 | 100 | 100 | 100 | 100 | 100 | 100 | A | 585 | 0.88 | 55 |
| Example 8 | A | A | A | A | A | A | A | 100 | 100 | 100 | 100 | 100 | 100 | 100 | A | 585 | 0.88 | 55 |
| Example 9 | A | B | A | A | A | A | A | 100 | 100 | 100 | 100 | 100 | 100 | 100 | A | 585 | 0.88 | 55 |
| Example 10 | B | B | A | A | A | A | A | 100 | 100 | 100 | 100 | 100 | 100 | 100 | A | 585 | 0.88 | 55 |
| Example 11 | B | B | A | A | A | A | A | 100 | 100 | 100 | 100 | 100 | 100 | 100 | A | 585 | 0.88 | 55 |
| Example 12 | B | B | A | A | A | A | A | 100 | 100 | 100 | 100 | 100 | 100 | 100 | A | 585 | 0.88 | 55 |
| Comparative examole 2 | B | D | A | A | A | A | A | 100 | 100 | 100 | 95 | 50 | 30 | 100 | A | 585 | 0.88 | 55 |
| Comparative example 3 | B | B | A | A | A | A | A | 100 | 100 | 100 | 96 | 80 | 70 | 100 | B | 585 | 0.88 | 55 |

### NUMERICAL REFERENCES

1: Polyrotaxane
2: Axis molecule
3: Ring form molecule
4: Bulky terminal end
5: Side chain

## Claims

1. A primer composition for an optical article comprising;
a urethane prepolymer (A) including two or more isocyanate groups blocked by a blocking agent in a molecule, which is a reaction product of a polyisocyanate compound (A1) having two or more isocyanate groups in a molecule and a polyol compound (A2) which is at least one selected from the group consisting of polycarbonate polyol, polyester polyol, and polycaprolactone polyol having two or more hydroxyl groups in a molecule;
an active hydrogen containing compound (B) which comprises two or more active hydrogen functional groups including active hydrogen in a molecule; and
an organic solvent (C) which does not include active hydrogen.

2. The primer composition for the optical article according to claim 1, wherein
the urethane prepolymer (A) is a reaction product of the polyisocyanate compound (A1), the polyol compound (A2), and a chain extender (A3) having two or more active hydrogen functional groups in a molecule.

3. The primer composition for the optical article according to claim 1, wherein
the urethane prepolymer (A) is obtained by reacting the polyisocyanate compound (A1) and the polyol compound (A2) in a ratio that nA2 to nA1 (nA2/nA1) is within a range of 0.5 to 0.95, in which
nA1 represents a total number of moles of the isocyanate groups included in the polyisocyanate compound (A1) and
nA2 represents a total number of moles of the hydroxyl groups included in the polyol compound (A2).

4. The primer composition for the optical article according to claim 2, wherein
the urethane prepolymer (A) is obtained by reacting the polyisocyanate compound (A1), the polyol compound (A2), and the chain extender (A3) in a ratio that a total of nA2 and nA3 to nA1 ((nA2 + nA3)/nA1) is within a range of 0.5 to 0.95, in which
nA1 represents a total number of moles of the isocyanate groups included in the polyisocyanate compound (A1),
nA2 represents a total number of moles of the hydroxyl groups included in the polyol compound (A2), and
nA3 represents a total number of moles of the active hydrogen functional groups included in the chain extender (A3).

5. The primer composition for the optical article according to any one of claims 1 to 4, wherein the polyol compound (A2) has a number average molecular weight within a range of 300 to 10000.

6. The primer composition for the optical article according to any one of claims 1 to 5, wherein a total number of moles of the active hydrogen functional groups included in the active hydrogen containing compound (B) is within a range of 0.1 to 1 mol when a total number of moles of the isocyanate groups blocked by the blocking agent included in the urethane prepolymer (A) is 1 mol.

7. The primer composition for the optical composition according to any one claims 1 to 6, wherein the blocking agent in the urethane prepolymer (A) is at least one selected from the group consisting of alcohols, lactams, phenols, oximes, active methylene compounds, diester malonate based compounds, and acetoacetic ester based compounds.

8. The primer composition for the optical article according to any one of claims 1 to 7, wherein a molecular weight of the active hydrogen containing compound (B) is within a range of 50 to 300 which is 0.01 to 1.0 times of a number average molecular weight of the polyol compounds (A2).

9. The primer composition for the optical article according to any one of claims 1 to 8 further including a leveling agent (D).

10. The primer composition for the optical article according to any one claims 1 to 9 further including a photochromic compound (E).

11. A multilayer body having a primer layer made of the primer composition for the optical article according to any one of claims 1 to 10 on an optical substrate.

12. An optical article comprising a photochromic layer including a photochromic compound on the primer layer of the multilayer body according to claim 11.

13. A method of producing a multilayer body including a step of forming a primer layer of the primer composition for the optical article according to any one of claims 1 to 10 on an optical substrate using a spin coat method or a dip coat method, and thereby curing thereof.
